(19) Europäisches Patentamt
European Patent Office
Office européen des brevets

(11) EP 3 885 940 A1

(12) **EUROPEAN PATENT APPLICATION**
published in accordance with Art. 153(4) EPC

(43) Date of publication:
29.09.2021 Bulletin 2021/39

(21) Application number: 18940965.9

(22) Date of filing: 21.11.2018

(51) Int Cl.:
**G06F 17/00** (2019.01)

(86) International application number:
PCT/CN2018/116661

(87) International publication number:
WO 2020/103024 (28.05.2020 Gazette 2020/22)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(71) Applicant: Guangzhou Xaircraft Technology Co., Ltd
Tianhe District
Guangzhou,
Guangdong 510000 (CN)

(72) Inventors:
• LIU, Peng
  Guangzhou, Guangdong 510000 (CN)
• JIN, Xiaohui
  Guangzhou, Guangdong 510000 (CN)

(74) Representative: Patentanwälte Bals & Vogel
Universitätsstrasse 142
44799 Bochum (DE)

(54) **JOB CONTROL SYSTEM, JOB CONTROL METHOD, APPARATUS, DEVICE AND MEDIUM**

(57) The present disclosure provides an operation control system, the operation control system includes a control terminal and an unmanned aerial vehicle for operation. The control terminal is configured to obtain map tile data corresponding to an operation area, generate an area map of the operation area according to the map tile data and display the area map, determine at least one operation plot in the operation area according to at least one area locating point selected by a user from the area map, generate an operation route corresponding to the at least one operation plot, and send the operation route to the unmanned aerial vehicle for operation. The unmanned aerial vehicle for operation is configured to receive the operation route and perform a flight operation in the at least one operation plot according to the operation route. The present disclosure further provides an operation control method and device, an apparatus and a medium.

FIG. 1

EP 3 885 940 A1

**Description**

TECHNICAL FIELD

• Embodiments of the present disclosure relate to a technical field of surveying and mapping, for example, to an operation control system, an operation control method and device, an apparatus and a medium.

BACKGROUND

. In recent years, Unmanned Aerial Vehicles (UAVs) have been widely used in fields of surveying and mapping, emergency response, disaster relief and the like due to their characteristics such as high efficiency, flexibility and low cost.

. In related technologies, when using a control terminal of an unmanned aerial vehicle to determine an operation route of the unmanned aerial vehicle, a user generally uses an operating lever of the control terminal or an operating interface to input a complete route instruction. For example, the operation route of the unmanned aerial vehicle is controlled by moving an operating lever of a remote controller for an unmanned aerial vehicle up, down, left, and right, or the user manually inputs the operation route of the unmanned aerial vehicle in the operating interface of the control terminal.

. In a process of implementing the present disclosure, the inventors have found that the related technologies have the following defects: it takes a long time for a user to use the operating lever of the control terminal or the operating interface to input the complete route instruction, and the user experience is low.

SUMMARY

. Embodiments of the present disclosure provide an operation control system, an operation control method and device, an apparatus and a medium to improve generation efficiency of an operation route of an unmanned aerial vehicle and intelligence of operation control of the unmanned aerial vehicle.

. Embodiments of the present disclosure provide an operation control system, including: a control terminal and an unmanned aerial vehicle for operation.

. The control terminal is configured to obtain map tile data corresponding to an operation area, generate an area map of the operation area according to the map tile data and display the area map, determine at least one operation plot in the operation area according to at least one area locating point selected by a user from the area map, generate an operation route corresponding to the at least one operation plot, and send the operation route to the unmanned aerial vehicle for operation.

. The unmanned aerial vehicle for operation is configured to receive the operation route and perform a flight operation in the at least one operation plot according to the operation route.

. Optionally, the system further includes: an unmanned aerial vehicle for surveying and mapping.

. The control terminal is further configured to: use the operation area as an area to be surveyed and mapped, determine surveying and mapping parameters matching the area to be surveyed and mapped, and send the surveying and mapping parameters to the unmanned aerial vehicle for surveying and mapping. The surveying and mapping parameters include a plurality of sample points for surveying and mapping based on which an unmanned aerial vehicle for surveying and mapping performs surveying and mapping in the area to be surveyed and mapped.

. The unmanned aerial vehicle for surveying and mapping is configured to: receive the surveying and mapping parameters, and perform a flight photographing in the area to be surveyed and mapped according to the surveying and mapping parameters to obtain a surveying and mapping photo collection corresponding to the plurality of sample points for surveying and mapping. The surveying and mapping photo collection is set to generate the map tile data of the area to be surveyed and mapped.

. Optionally, the system further includes: a ground terminal.

. The ground terminal is configured to obtain the surveying and mapping photo collection, perform at least one of photo combination and photo stitching on a plurality of photos of the surveying and mapping photo collection to obtain a surveying and mapping map corresponding to the area to be surveyed and mapped, and generate the map tile data corresponding to the area to be surveyed and mapped according to the surveying and mapping map.

. The control terminal is configured to obtain the map tile data corresponding to the operation area from the ground terminal.

. Embodiments of the present disclosure further provide an operation control method for a control terminal, including: obtaining map tile data corresponding to an operation area; generating an area map of the operation area according to the map tile data and displaying the area map; determining at least one operation plot in the operation area according to at least one area locating point selected by a user from the area map; and generating an operation route corresponding to the at least one operation plot, and sending the operation route to an unmanned aerial vehicle for operation to make the unmanned aerial vehicle for operation perform a flight operation according to the operation route.

. Optionally, before the obtaining map tile data corresponding to an operation area, the method further includes: using the operation area as an area to be surveyed and mapped and determining surveying and mapping parameters matching the area to be surveyed and mapped, wherein the surveying and mapping parameters include a plurality of sample points for surveying and mapping based on which an unmanned aerial vehicle for surveying and mapping performs surveying and mapping in the area to be surveyed and mapped; and sending the surveying and mapping parameters to the unmanned aerial vehicle for surveying and mapping, wherein the surveying and mapping parameters are set to instruct the unmanned aerial vehicle for surveying and mapping to perform a flight photographing in the area to be surveyed and mapped to obtain a surveying and mapping photo collection corresponding to the plurality of sample points for surveying and mapping to generate the map tile data of the area to be surveyed and mapped.

. Optionally, the determining surveying and mapping parameters matching the area to be surveyed and mapped includes: obtaining a reference photographing location point corresponding to the area to be surveyed and mapped, and establishing a mapping relationship between a photographing point in a combined photographing point set and the reference photographing location point; determining a plurality of auxiliary photographing location points corresponding to the reference photographing location point according to the mapping relationship and a preset relative position relationship between each two photographing points in the combined photographing point set; and using the reference photographing location point and the plurality of auxiliary photographing location points as sample points for surveying and mapping based on which an unmanned aerial vehicle for surveying and mapping performs surveying and mapping in the area to be surveyed and mapped.

. Optionally, the determining surveying and mapping parameters matching the area to be surveyed and mapped includes: determining one or a plurality of combined photographing areas for surveying and mapping within the area to be surveyed and mapped according to information of the area to be surveyed and mapped and a combined photographing area corresponding to a combined photographing point set; determining a plurality of photographing location points in the combined photographing area for surveying and mapping according to a preset relative position relationship between each two photographing points in the combined photographing point set; and using the plurality of photographing location points as sample points for surveying and mapping based on which an unmanned aerial vehicle for surveying and mapping performs surveying and mapping in the area to be surveyed and mapped.

. Optionally, there is an overlapping area between each two of a plurality of photos taken according to a plurality of photographing points in the combined photographing point set; and/or there is an overlapping area between each two of the plurality of combined photographing areas for surveying and mapping determined in the area to be surveyed and mapped. The combined photographing areas for surveying and mapping are photographing areas formed by combing and/or stitching the plurality of photos after obtaining the plurality of photos taken according to the plurality of photographing points in the combined photographing point set; and a surveying and mapping map of the area to be surveyed and mapped is formed by combing and/or stitching each of the combined photographing areas for surveying and mapping.

. Optionally, photographing points in the combined photographing point set include a central photographing point and four peripheral photographing points, the four peripheral photographing points are four vertices of a rectangle centered on the central photographing point, respectively; and a composite photo obtained by photographing based on all the photographing points in the combined photographing point set is of a rectangular shape.

• Optionally, the obtaining a reference photographing location point corresponding to the area to be surveyed and mapped includes: detecting a touch operation of a user in a human-machine interface, and determining a screen location point according to the touch operation; and obtaining a geographic position coordinate matching the screen location point as the reference photographing location point from map data of the area to be surveyed and mapped currently displayed on the human-machine interface.

. Optionally, the detecting a touch operation of a user in a human-machine interface, and determining a screen location point according to the touch operation includes at least one of the following: determining a touch point of the user as the screen location point if it is detected that the touch operation of the user is a single-point touch operation; selecting a point on a line segment generated by the user's touch as the screen location point if it is detected that the touch operation of the user is a stroke touch operation; and selecting a point inside a box generated by the user's touch as the screen location point if it is detected that the touch operation of the user is a box-drawing touch operation.

• Optionally, the obtaining a reference photographing location point corresponding to the area to be surveyed and mapped includes: obtaining a central point of the area to be surveyed and mapped as the reference photographing location point.

. Optionally, the obtaining a reference photographing location point corresponding to the area to be surveyed and mapped includes: sending position query information to the unmanned aerial vehicle for surveying and mapping, and using a geographic position coordinate fed back by the unmanned aerial vehicle for surveying and mapping as the reference photographing location point. The unmanned aerial vehicle for surveying and mapping is preset at a position matching the area to be surveyed and mapped.

. Optionally, before the sending position query information to the unmanned aerial vehicle for surveying and mapping, the method further includes: receiving at least one flight control instruction for the unmanned aerial vehicle for surveying and mapping input by a user, and sending the flight control instruction to the unmanned aerial vehicle for surveying and mapping; and sending a hovering instruction to the unmanned aerial vehicle for surveying and mapping to control the unmanned aerial vehicle for surveying and mapping to hover at a current position when it is confirmed that a position confirmation response input by the user is received. The flight control instruction is set to control the unmanned aerial vehicle for surveying and mapping to perform at least one of the following in air: moving in a set direction and moving by a set distance.

. Optionally, the obtaining a reference photographing location point corresponding to the area to be surveyed and mapped includes: obtaining a geographic position coordinate input by a user as the reference photographing location point.

. Optionally, the establishing a mapping relationship between a photographing point in a combined photographing point set and the reference photographing location point includes: establishing a mapping relationship between a photographing point selected by a user in the combined photographing point set and the reference photographing location point.

. Optionally, the establishing a mapping relationship between a photographing point in a combined photographing point set and the reference photographing location point includes: establishing a mapping relationship between the central photographing point in the combined photographing point set and the reference photographing location point.

. Optionally, the establishing a mapping relationship between a photographing point in a combined photographing point set and the reference photographing location point includes: calculating a distance between the reference photographing location point and each of key locating points of the area to be surveyed and mapped, the key locating points including corner points of the area to be surveyed and mapped and a central point of the area to be surveyed and mapped; obtaining one of the key locating points closest to the reference photographing location point as a target reference point; and selecting, according to position information of the target reference point in the area to be surveyed and mapped, a photographing point matching the position information in the combined photographing point set to establish a mapping relationship with the reference photographing location point.

. Optionally, the determining one or a plurality of combined photographing areas for surveying and mapping within the area to be surveyed and mapped according to information of the area to be surveyed and mapped and a combined photographing area corresponding to a combined photographing point set includes: selecting a locating point in the area to be surveyed and mapped; determining one combined photographing area for surveying and mapping in the area to be surveyed and mapped according to the locating point and the combined photographing area; and if the combined photographing area for surveying and mapping does not completely cover the area to be surveyed and mapped, selecting a new locating point in the area to be surveyed and mapped, and returning to perform an operation of the determining one combined photographing area for surveying and mapping in the area to be surveyed and mapped according to the locating point and the combined photographing area, until all combined photographing areas for surveying and mapping being able to completely cover the area to be surveyed and mapped are determined.

. Optionally, the determining a plurality of photographing location points in the combined photographing area for surveying and mapping according to a preset relative position relationship between each two photographing points in the combined photographing point set includes: mapping the central photographing point in the combined photographing point set to an area midpoint of the combined photographing area for surveying and mapping, and using the area midpoint as one photographing location point; and mapping, according to a preset relative position relationship between each of the peripheral photographing points in the combined photographing point set and the central photographing point, each of the peripheral photographing points respectively to the combined photographing area for surveying and mapping to form a plurality of mapping points, and using the plurality of mapping points as the photographing location points.

. Optionally, before the determining one or a plurality of combined photographing areas for surveying and mapping within the area to be surveyed and mapped according to information of the area to be surveyed and mapped and a combined photographing area corresponding to a combined photographing point set, the method further includes: detecting a touch operation of a user in a human-machine interface and obtaining a screen selection area matching the touch operation; and obtaining a geographic position area matching the screen selection area as the information of the area to be surveyed and mapped from map data currently displayed on the human-machine interface.

. Optionally, the detecting a touch operation of a user in a human-machine interface and obtaining a screen selection area matching the touch operation includes: determining a closed area enclosed by connection lines of at least three touch points of the user as the screen selection area if it is detected that the touch operation of the user is a single-point touch operation; and/or using a box generated by the user's touch as the screen selection area if it is detected that the touch operation of the user is a box-drawing touch operation.

. Optionally, before the sending the surveying and mapping parameters to the unmanned aerial vehicle for surveying and mapping, the method further includes: obtaining photographing parameters of a photographing apparatus carried by the unmanned aerial vehicle for surveying and mapping, the photographing parameters including single-photo photographing areas of the unmanned aerial vehicle for surveying and mapping at a set flight altitude, and each photographing point being corresponding to one of the single-photo photographing areas; and determining the preset relative position relationship between each two photographing points in the combined photographing point set according to a preset photo overlap degree index and the single-photo photographing areas. The surveying and mapping parameters further include the set flight altitude, and the set flight altitude is set to instruct the unmanned aerial vehicle for surveying and mapping to perform a flight photographing in the area to be surveyed and mapped at the set flight altitude.

. Optionally, the determining the preset relative position relationship between each two photographing points in the combined photographing point set according to a preset photo overlap degree index and the single-photo photographing areas includes: determining a size of a single photo according to a frame size and a pixel width of the photographing apparatus; constructing a two-dimensional coordinate system, and selecting a target point in the two-dimensional coordinate system as the central photographing point; generating a central photo in the two-dimensional coordinate system according to the central photographing point and the size of a single photo; generating four peripheral photos matching the photo overlap degree index with the central photo at an upper left corner, a lower left corner, an upper right corner, and a lower right corner of the central photo, respectively; determining a coordinate value of a peripheral photographing point corresponding to each of the four peripheral photos in the two-dimensional coordinate system according to a mapping relationship between the size of a single photo and the single-photo photographing areas; and determining the preset relative position relationship between each two photographing points in the combined photographing point set according to coordinate values of the central photographing point and each peripheral photographing point in the two-dimensional coordinate system.

. Optionally, before the obtaining photographing parameters of a photographing apparatus carried by the unmanned aerial vehicle for surveying and mapping, the method further includes: calculating the set flight altitude according to a pixel width of the photographing apparatus, lens focal length of the photographing apparatus, and a ground pixel resolution.

. Optionally, the obtaining photographing parameters of a photographing apparatus carried by the unmanned aerial vehicle for surveying and mapping includes: calculating the single-photo photographing areas of the unmanned aerial vehicle for surveying and mapping at the set flight altitude according to a pixel width of the photographing apparatus, a frame size of the photographing apparatus, and a ground pixel resolution.

. Embodiments of the present disclosure further provide an operation control method for an unmanned aerial vehicle for operation, including: receiving an operation route sent by a control terminal; and performing a flight operation in at least one operation plot according to the operation route.

. Embodiments of the present disclosure further provide an operation control device for a control terminal, including: a map tile data obtaining module, configured to obtain map tile data corresponding to an operation area; a map displaying module, configured to generate an area map of the operation area according to the map tile data and display the area map; an operation plot determining module, configured to determine at least one operation plot in the operation area according to at least one area locating point selected by a user from the area map; and an operation route generating and sending module, configured to generate an operation route corresponding to the at least one operation plot, and send the operation route to an unmanned aerial vehicle for operation to make the unmanned aerial vehicle for operation perform a flight operation according to the operation route.

. Embodiments of the present disclosure further provide an operation control device for an unmanned aerial vehicle for operation, including: an operation route receiving module, configured to receive an operation route sent by a control terminal; and a flight operation module, configured to perform a flight operation in at least one operation plot according to the operation route.

• Embodiments of the present disclosure further provide a control terminal, including: one or more processors; a storage apparatus, configured to store one or more programs. When the one or more programs are executed by the one or more processors, the one or more processors implement an operation control method for a control terminal according to any embodiment of the present disclosure.

. Embodiments of the present disclosure further provide a computer storage medium, a computer program is stored on the computer storage medium, and when the program is executed by a processor, an operation control method for a control terminal according to any embodiment of the present disclosure is implemented.

. Embodiments of the present disclosure further provide an unmanned aerial vehicle for operation, including: one or more processors; a storage apparatus, configured to store one or more programs. When the one or more programs are executed by the one or more processors, the one or more processors implement an operation control method for an unmanned aerial vehicle for operation according to any embodiment of the present disclosure.

. Embodiments of the present disclosure further provide a computer storage medium, a computer program is stored on the computer storage medium, and when the program is executed by a processor, an operation control method for an unmanned aerial vehicle for operation according to any embodiment of the present disclosure is implemented.

## BRIEF DESCRIPTION OF DRAWINGS

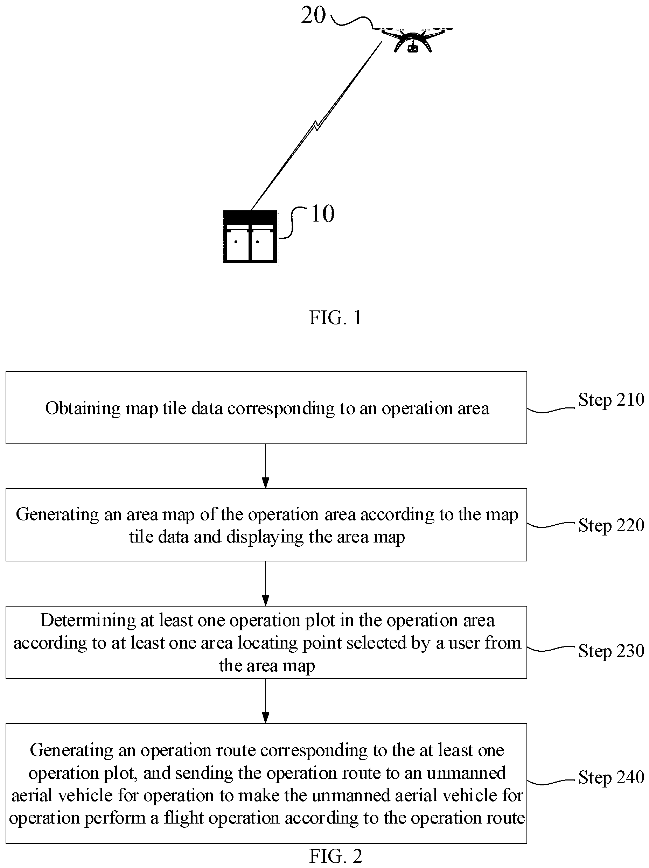

. FIG. 1 is a schematic diagram illustrating an operation control system according to a first embodiment of the present disclosure.

. FIG. 2 is a flowchart illustrating an operation control method for a control terminal according to a second embodiment of the present disclosure.

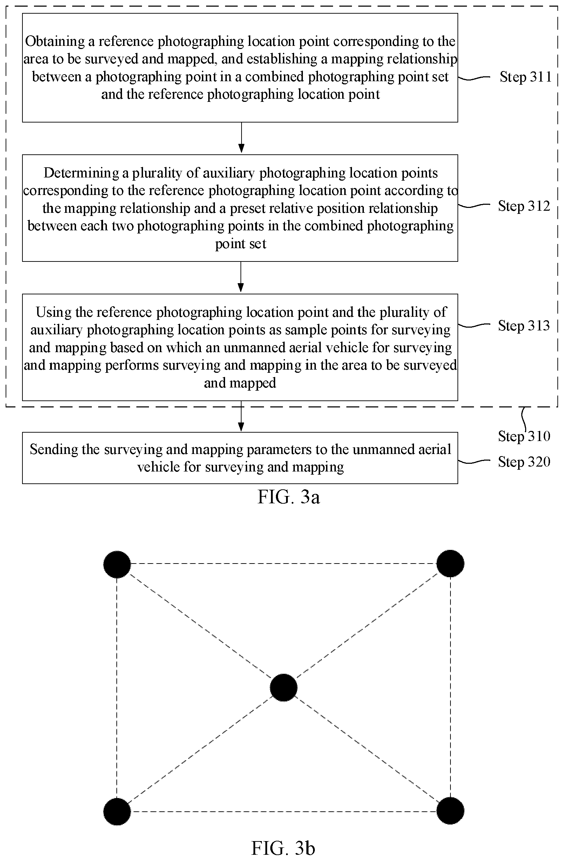

. FIG. 3a is a flowchart illustrating an operation control method for a control terminal according to a third embodiment of the present disclosure.

. FIG. 3b is a schematic diagram illustrating a position distribution of each photographing point in a combined photographing point set according to the third embodiment of the present disclosure.

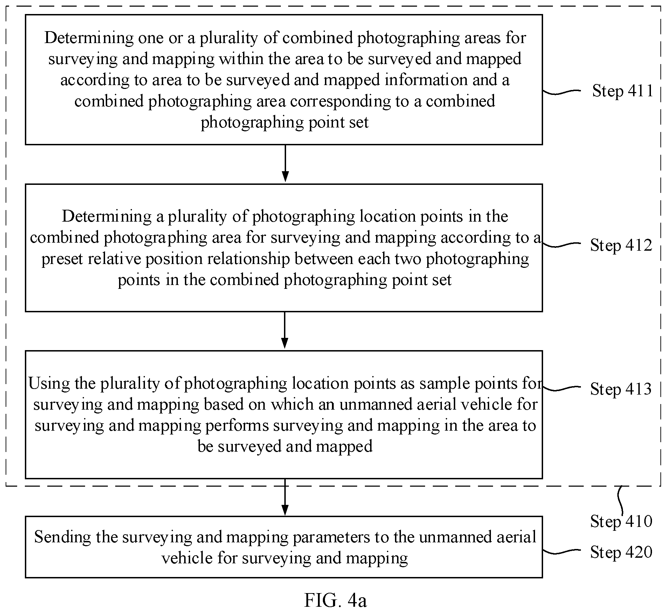

. FIG. 4a is a flowchart illustrating an operation control method for a control terminal according to a fourth embodiment of the present disclosure.

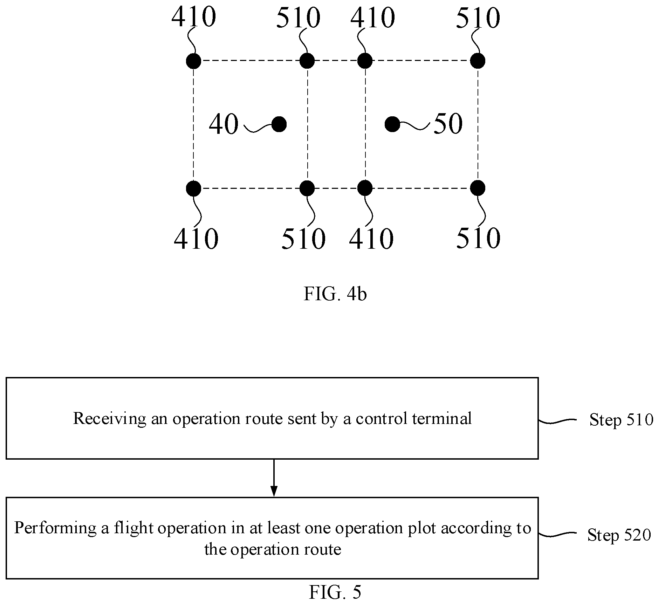

. FIG. 4b is a schematic diagram illustrating a distribution of each photographing location point according to the fourth embodiment of the present disclosure.

. FIG. 5 is a flowchart illustrating an operation control method for an unmanned aerial vehicle for operation according to a fifth embodiment of the present disclosure.

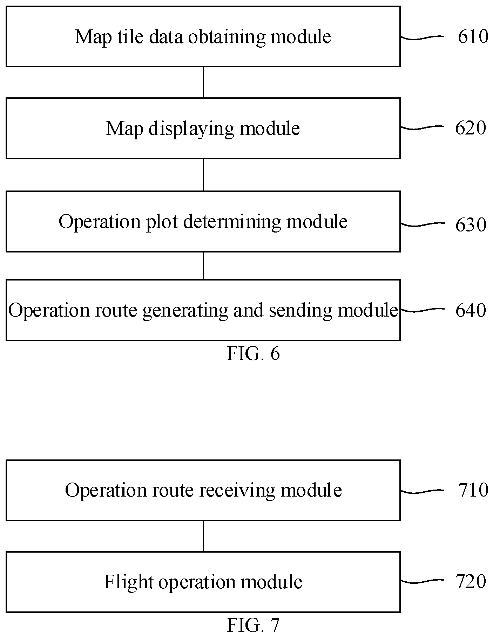

. FIG. 6 is a schematic diagram illustrating an operation control device for a control terminal according to a sixth embodiment of the present disclosure.

. FIG. 7 is a schematic diagram illustrating an operation control device for an unmanned aerial vehicle for operation according to a seventh embodiment of the present disclosure.

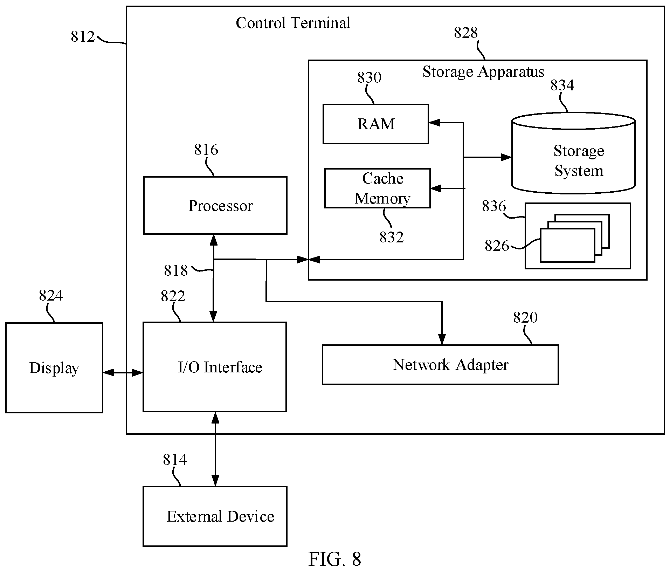

. FIG. 8 is a schematic structural diagram illustrating a control terminal according to an eighth embodiment of the present disclosure.

## DETAILED DESCRIPTION OF THE EMBODIMENTS

. The present disclosure will be described in further detail below with reference to the accompanying drawings and embodiments. It can be understood that the embodiments described here are merely intended to illustrate the present disclosure and are not intended to limit the present disclosure.

. For the convenience of description, the drawings only show a part but not all of the content related to the present disclosure. Before discussing the exemplary embodiments in more detail, it should be mentioned that some exemplary embodiments are described as processes or methods depicted as flowcharts. Although the flowcharts describe operations (or steps) as a sequential processing, many of the operations may be implemented in parallel, concurrently, or simultaneously. In addition, the order of each operation may be rearranged. The processing may be terminated when its operation is completed, but may also have additional steps not included in the drawings. The processing may correspond to methods, functions, procedures, subroutines, subprograms, and so on.

. First Embodiment

. FIG. 1 is a schematic diagram illustrating an operation control system according to a first embodiment of the present disclosure. As shown in FIG. 1, a structure of the operation control system includes: a control terminal 10 and an unmanned aerial vehicle for operation 20.

. The control terminal 10 is configured to obtain map tile data corresponding to an operation area, generate an area map of the operation area according to the map tile data and display the area map, determine at least one operation plot in the operation area according to at least one area locating point selected by a user from the area map, generate an operation route corresponding to the at least one operation plot, and send the operation route to the unmanned aerial vehicle for operation 20. The unmanned aerial vehicle for operation 20 is configured to receive the operation route and perform a flight operation in the at least one operation plot according to the operation route.

. The control terminal 10 may be any device that controls an unmanned aerial vehicle for surveying and mapping, such as a remote controller for an unmanned aerial vehicle, or a control device with a human-machine interface. The embodiments of the present disclosure do not limit the device type of the control terminal. The unmanned aerial vehicle for operation 20 may be an unmanned aerial vehicle configured to perform operations on an area to be surveyed and mapped according to operational requirements, such as detecting crops, soil, vegetation, or water quality in the area to be surveyed and mapped, or spraying pesticides in the area to be surveyed and mapped. The map tile data is related data set to generate a tile map, which is formed by slicing map data with a slicing algorithm. The map tile data may be set to generate the tile map. A pyramid model formed by the tile map is a multi-resolution hierarchical model. From a bottom to a top of a tile-pyramid, the resolution is getting lower and lower, but the geographical range is unchanged.

. In the embodiments of the present disclosure, as shown in FIG. 1, the operation control system includes the control terminal 10 and the unmanned aerial vehicle for operation 20. The control terminal 10 may obtain the map tile data corresponding to the operation area. Since the map tile data includes a variety of map data with different resolutions, the control terminal 10 may generate the area map corresponding to the operation area according to the map tile data and resolution requirements of the unmanned aerial vehicle for operation, and display the area map. When controlling the control terminal 10, a user may select at least one area locating point from the area map. The area locating point may be set to determine at least one operation plot in the operation area. For example, a 10m*10m square operation plot is generated by taking the area locating point as a center. Correspondingly, after the operation plot is determined by the control terminal 10, the operation route corresponding to the operation plot may be automatically generated and be sent to the unmanned aerial vehicle for operation by control terminal 10. For example, in a 10m*10m square operation plot, a vertex of an upper left corner is used as a starting point, and it is to travel 1m along edges of the operation plot in a clockwise direction every 5 seconds. Different operation routes may be generated according to different operation plots, which is not limited in the embodiments of the present disclosure. After the unmanned aerial vehicle for operation receives the operation route, it may perform the flight operation in a determined operation plot according to the operation route.

. Optionally, the system further includes an unmanned aerial vehicle for surveying and mapping. The control terminal 10 is further configured to: use the operation area as an area to be surveyed and mapped, determine surveying and mapping parameters matching the area to be surveyed and mapped, and send the surveying and mapping parameters to the unmanned aerial vehicle for surveying and mapping. The surveying and mapping parameters include a plurality of sample points for surveying and mapping based on which an unmanned aerial vehicle for surveying and mapping performs surveying and mapping in the area to be surveyed and mapped. The unmanned aerial vehicle for surveying and mapping is configured to: receive the surveying and mapping parameters, and perform a flight photographing in the area to be surveyed and mapped according to the surveying and mapping parameters to obtain a surveying and mapping photo collection corresponding to the plurality of sample points for surveying and mapping. The surveying and mapping photo collection is set to generate the map tile data of the area to be surveyed and mapped.

. The unmanned aerial vehicle for surveying and mapping may be an unmanned aerial vehicle that is set to survey and map the area to be surveyed and mapped to obtain data related to the area to be surveyed and mapped, such as obtaining multiple surveying and mapping photos of the area to be surveyed and mapped. The unmanned aerial vehicle for surveying and mapping is equipped with photographing apparatus, which is set to obtain multiple surveying and mapping photos corresponding to the area to be surveyed and mapped.

. In the embodiments of the present disclosure, the control terminal 10 may also use the operation area as the area to be surveyed and mapped, and determine sample points for surveying and mapping based on which an unmanned aerial vehicle for surveying and mapping performs surveying and mapping in the area to be surveyed and mapped, and send the surveying and mapping parameters formed by the sample points for surveying and mapping to the unmanned aerial vehicle for surveying and mapping. The unmanned aerial vehicle for surveying and mapping may receive the surveying and mapping parameters determined by the control terminal, and perform the flight photographing in the area to be surveyed and mapped according to the surveying and mapping parameters to obtain the surveying and mapping photo collection corresponding to corresponding to the plurality of sample points for surveying and mapping included in the surveying and mapping parameters. The unmanned aerial vehicle for surveying and mapping may use the surveying and mapping photo collection to generate the map tile data of the area to be surveyed and mapped, and the control terminal 10 may obtain the map tile data corresponding to the operation area from the unmanned aerial vehicle for surveying and mapping.

. Optionally, the device further includes a ground terminal. The ground terminal is configured to obtain the surveying and mapping photo collection, perform photo combination and/or photo stitching on a plurality of photos of the surveying and mapping photo collection to obtain a surveying and mapping map corresponding to the area to be surveyed and mapped, and generate the map tile data corresponding to the area to be surveyed and mapped according to the surveying and mapping map. The control terminal is configured to obtain the map tile data corresponding to the operation area from the ground terminal.

. The ground terminal may be matched with the unmanned aerial vehicle for surveying and mapping, and be set as a device that processes data obtained by the unmanned aerial vehicle for surveying and mapping, such as a laptop or tablet computer. The embodiments of the present disclosure do not limit the device types of the control terminal and the ground terminal.

. In the embodiments of the present disclosure, the unmanned aerial vehicle for surveying and mapping may send the obtained surveying and mapping photo collection to the ground terminal, so that the ground terminal may perform photo combination and/or photo stitching on the plurality of photos of the surveying and mapping photo collection to obtain the surveying and mapping map corresponding to the area to be surveyed and mapped. In order to be able to perform photo combination and/or photo stitching on the plurality of photos of the surveying and mapping photo collection to form a complete image, there is a certain degree of overlap between the plurality of photos corresponding to the plurality of sample points for surveying and mapping, but there is no requirement for a certain degree of overlap between each two successive photos. Thus, the processing time of image data may be greatly reduced, thereby improving the efficiency of surveying and mapping. At the same time, the generation of the map tile data may also be completed by the ground terminal, and the control terminal 10 may also obtain the map tile data corresponding to the operation area from the ground terminal.

. The embodiments of the present disclosure form an operation control system through a control terminal and an unmanned aerial vehicle for operation, the control terminal is configured to obtain map tile data corresponding to an operation area to generate and display an area map of the operation area, determine at least one operation plot in the operation area according to at least one area locating point selected by a user from the area map, generate an operation route corresponding to the operation plot, and send the operation route to the unmanned aerial vehicle for operation, so that the unmanned aerial vehicle for operation may perform a flight operation in the at least one operation plot according to the operation route. In this way, an operation control system and method are proposed, and a control terminal is used to automatically generate a corresponding operation route for an operation plot selected by a user, which solves problems of high operating costs and low route generation efficiency of an existing unmanned aerial vehicle, and improves generation efficiency of an operation route of an unmanned aerial vehicle and intelligence of operation control of the unmanned aerial vehicle.

. Second Embodiment

. FIG. 2 is a flowchart illustrating an operation control method for a control terminal according to a second embodiment of the present disclosure. This embodiment is applicable to a case where an operation route is generated automatically, the method may be executed by an operation control device for a control terminal, and the device may be implemented by means of software and/or hardware, and may generally be integrated in a control device (e.g., a remote controller of an unmanned aerial vehicle) and used in cooperation with an unmanned aerial vehicle for operation that is responsible for flight operation. Correspondingly, as shown in FIG. 2, the method includes the following operations.

. Step 210: obtaining map tile data corresponding to an operation area.

. In the embodiments of the present disclosure, the control terminal may obtain the map tile data corresponding to the operation area from an unmanned aerial vehicle for surveying and mapping or a ground terminal.

. Step 220: generating an area map of the operation area according to the map tile data and displaying the area map.

. Correspondingly, since the map tile data includes a variety of map data with different resolutions, the control terminal may generate the area map corresponding to the operation area according to the map tile data and resolution requirements of the unmanned aerial vehicle for operation, and display the area map, after obtaining the map tile data corresponding to the operation area.

. Step 230: determining at least one operation plot in the operation area according to at least one area locating point selected by a user from the area map.

. Step 240: generating an operation route corresponding to the at least one operation plot, and sending the operation route to an unmanned aerial vehicle for operation to make the unmanned aerial vehicle for operation perform a flight operation according to the operation route.

. In the embodiments of the present disclosure, when controlling the control terminal, a user may select at least one area locating point from the area map. The area locating point may be set to determine at least one operation plot in the operation area. For example, a 10m*10m square operation plot is generated by taking the area locating point as a center. Correspondingly, after the operation plot is determined by the control terminal, the operation route corresponding to the operation plot may be automatically generated and be sent to the unmanned aerial vehicle for operation by control terminal. For example, in a 10m*10m square operation plot, a vertex of an upper left corner is used as a starting point, and it is to travel 1m along edges of the operation plot in a clockwise direction every 5 seconds. Different operation routes may be generated according to different operation plots, which is not limited in the embodiments of the present disclosure. After the unmanned aerial vehicle for operation receives the operation route, it may perform the flight operation in a determined operation plot according to the operation route.

. In an optional embodiment of the present disclosure, before the obtaining map tile data corresponding to an operation area, the method further including: using the operation area as an area to be surveyed and mapped and determining surveying and mapping parameters matching the area to be surveyed and mapped, wherein the surveying and mapping parameters includes a plurality of sample points for surveying and mapping based on which an unmanned aerial vehicle for surveying and mapping performs surveying and mapping in the area to be surveyed and mapped; and sending the surveying and mapping parameters to the unmanned aerial vehicle for surveying and mapping, wherein the surveying and mapping parameters are set to instruct the unmanned aerial vehicle for surveying and mapping to perform a flight photographing in the area to be surveyed and mapped to obtain a surveying and mapping photo collection corresponding to the plurality of sample points for surveying and mapping to generate the map tile data of the area to be surveyed and mapped.

. The area to be surveyed and mapped is an area having clear latitude and longitude ranges, and may be an area with any shape and any size. The shape and size of the area to be surveyed and mapped are not limited in the embodiments of the present disclosure.

. In the UAV-based aerial surveying and mapping technology, the observation of the current situation of an aerially photographed area is carried out by the mounted video capture device using a remote image transmission technology, and at the same time the taken photos are stitched by using an aerially photographed image stitching technology to obtain an overall image of the aerially photographed area. In the traditional UAV-based aerial survey method, when photos are being taken, in general, mobile surveying and mapping is performed in an area to be surveyed and mapped in a traversal manner along parallel lines, and it is usually required that each two successive photos have a certain degree of overlap for ensuring a successful stitching. Each photo is required to overlap with other photos to a certain degree in both horizontal and vertical directions in order to ensure normal stitching in the later stage, and in general, the degree of overlap is generally required to be greater than 50% in order to ensure the normal stitching in the later stage. The traditional UAV-based aerial survey methods are all used for surveying and mapping an aerially photographed area of a large-area land and it is necessary to take multiple photos having a relatively high degree of overlap during the surveying and mapping. Stitching the above photos taken by the UAV takes a long time and has a low efficiency. In addition, if the photos acquired by the UAV are uploaded to a server for stitching processing, the processes of data uploading and processing takes a longer time. Moreover, when the traditional UAV-based aerial survey method is applied to surveying and mapping of a small plot, not only the operation is complicated and a long processing time is required, but also high hardware cost is involved.

• In the embodiments of the present disclosure, the control terminal may also use the operation area as the area to be surveyed and mapped, and determine sample points for surveying and mapping based on which an unmanned aerial vehicle for surveying and mapping performs surveying and mapping in the area to be surveyed and mapped, and send the surveying and mapping parameters formed by the sample points for surveying and mapping to the unmanned aerial vehicle for surveying and mapping. The unmanned aerial vehicle for surveying and mapping may receive the surveying and mapping parameters determined by the control terminal, and perform the flight photographing in the area to be surveyed and mapped according to the surveying and mapping parameters to obtain the surveying and mapping photo collection corresponding to corresponding to the plurality of sample points for surveying and mapping included in the surveying and mapping parameters. The unmanned aerial vehicle for surveying and mapping may use the surveying and mapping photo collection to generate the map tile data of the area to be surveyed and mapped, and the control terminal may obtain the map tile data corresponding to the operation area from the unmanned aerial vehicle for surveying and mapping. The unmanned aerial vehicle for surveying and mapping may send the obtained surveying and mapping photo collection to the ground terminal, so that the ground terminal may perform photo combination and/or photo stitching on the plurality of photos of the surveying and mapping photo collection to obtain the surveying and mapping map corresponding to the area to be surveyed and mapped. Or, the unmanned aerial vehicle for surveying and mapping may perform photo combination and/or photo stitching on the plurality of photos of the surveying and mapping photo collection locally to obtain the surveying and mapping map corresponding to the area to be surveyed and mapped. In order to be able to perform photo combination and/or photo stitching on the plurality of photos of the surveying and mapping photo collection to form a complete image, there is a certain degree of overlap between the plurality of photos corresponding to the plurality of sample points for surveying and mapping, but there is no requirement for a certain degree of overlap between each two successive photos. Thus, the processing time of image data may be greatly reduced, thereby improving the efficiency of surveying and mapping.

. The technical solution of this embodiment, the control terminal is used to obtain map tile data corresponding to an operation area to generate and display an area map of the operation area, determine at least one operation plot in the operation area according to at least one area locating point selected by a user from the area map, generate an operation route corresponding to the operation plot, and send the operation route to the unmanned aerial vehicle for operation, so that the unmanned aerial vehicle for operation may perform a flight operation in the at least one operation plot according to the operation route. In this way, an operation control system and method are proposed, and a control terminal is used to automatically generate a corresponding operation route for an operation plot selected by a user, so that problems of high operating costs and low route generation efficiency of an existing unmanned aerial vehicle are solved, and the generation efficiency of an operation route of an unmanned aerial vehicle and intelligence of operation control of the unmanned aerial vehicle are improved.

. Third Embodiment

. FIG. 3a is a flowchart illustrating an operation control method for a control terminal according to a third embodiment of the present disclosure. This embodiment is described in detail on the basis of the foregoing embodiments. In this embodiment, one implementation manner of determining the surveying and mapping parameters matching the area to be surveyed and mapped through the control terminal is proposed. Correspondingly, as shown in FIG. 3a, the method of this embodiment may include the following steps.

. Step 310: using the operation area as an area to be surveyed and mapped and determining surveying and mapping parameters matching the area to be surveyed and mapped, wherein the surveying and mapping parameters include a plurality of sample points for surveying and mapping based on which an unmanned aerial vehicle for surveying and mapping performs surveying and mapping in the area to be surveyed and mapped.

. Correspondingly, Step 310 may include the following operations.

. Step 311: obtaining a reference photographing location point corresponding to the area to be surveyed and mapped, and establishing a mapping relationship between a photographing point in a combined photographing point set and the reference photographing location point.

. The reference photographing location point is a location point in the area to be surveyed and mapped, which has a matching geographical position coordinate. The location point described above may be selected by a user from the area to be surveyed and mapped (for example, by clicking, or directly inputting latitude and longitude, or the like), or may be automatically determined based on the area shape of the area to be surveyed and mapped (the location point may be, for example, a central point of the area to be surveyed and mapped, or a corner point of the area to be surveyed and mapped, or the like). The combined photographing point set may be a set of photographing points which are preset based on a preset distribution rule, in which a plurality of photographing points may be included, and each two photographing points have relative direction and relative distance relationships therebetween. For example, the combined photographing point set includes five photographing points, which are located at the center and the four vertices of a rectangle, respectively. Here, a relative distance between each vertex and the central point is 100 m. For another example, each vertex is located in one of the four directions of east, south, west, and north, respectively.

. In the embodiments of the present disclosure, all the sample points for surveying and mapping which are corresponding to the area to be surveyed and mapped may be obtained with the assistance of the combined photographing point set. Optionally, one of the points in the area to be surveyed and mapped may be firstly determined as a reference photographing location point, and then a mapping relationship is established between the reference photographing location point and one of the photographing points in the combined photographing point set.

. In other words, each two photographing points in the combined photographing point set have a determined relative position relationship therebetween, but a correspondence relationship is not established between the photographing points and actual geographical position information, and therefore the photographing points cannot be directly mapped into the actual area to be surveyed and mapped. As long as actual geographical position information on one photographing point in the combined photographing point set is given, the geographical position information on all the photographing points in the combined photographing point set can be determined and obtained.

• Typically, there is an overlapping area between each two of a plurality of photos taken according to a plurality of photographing points in the combined photographing point set. Correspondingly, after a plurality of photos are taken according to the plurality of photographing points in the combined photographing point set, the plurality of photos may be combined and/or stitched to form a complete combined area. The combined area may completely cover the area to be surveyed and mapped, or may cover only a part of the area to be surveyed and mapped, which is not limited in this embodiment.

. FIG. 3b is a schematic diagram illustrating a position distribution of each photographing point in a combined photographing point set according to the third embodiment of the present disclosure. In an optional embodiment of the present disclosure. As shown in FIG. 3b, the photographing points in the combined photographing point set include a central photographing point and four peripheral photographing points, and the peripheral photographing points are four vertices of a rectangle centered on the central photographing point, respectively. A composite photo obtained by photographing based on all the photographing points in the combined photographing point set is of a rectangular shape.

. In the embodiments of the present disclosure, optionally, as shown in FIG. 3b, the combined photographing point set may include five photographing points, which are a central photographing point and four peripheral photographing points, respectively. The central photographing point may be a center of a rectangle, and correspondingly, the peripheral photographing points may be four vertices of the rectangle corresponding to the central photographing point. There is a certain position relationship between each two photographing points, and the position relationship should be set to satisfy such a condition that a complete rectangular photo can be obtained when all the photos taken at the respective photographing location points determined from all the photographing points are combined. The combination process is performed by covering all the photos according to the overlapping images between one another. In other embodiments, after the default mapping is completed, each of auxiliary photographing points may be rotated around the reference photographing location point based on an operation performed by the user, or may be moved based on an operation such as a swipe operation performed by the user.

. In the related art, in the formation of surveying and mapping points corresponding to an area to be surveyed and mapped, it should be ensured that there should be a preset degree of overlap between a photo taken at one surveying and mapping point and all photos taken at other photographing points at positions horizontally and vertically adjacent to the photo, because mobile surveying and mapping is to be performed in the area to be surveyed and mapped in a traversal manner along parallel lines. As a result, a surveying and mapping photo contains a small amount of information different from that contained in other surveying and mapping photos, and therefore there is a great demand for photos, and a large amount of work and time is required for synthesis and stitching of the photos in the later stage. In this embodiment, the selected five photographing points in the combined photographing point set are one central photographing point and four peripheral photographing points, it is sufficient as long as it can be ensured that each peripheral photographing point meets the above required degree (e.g., 60% or 70% or the like) of overlap relative to the central photographing point, while each two peripheral photographing points are not required to meet such a high degree of overlap therebetween. This greatly reduces the total number of surveying and mapping photos that need to be taken in the surveying and mapping of an area to be surveyed and mapped having a fixedly size, whereby the time and hardware cost required for synthesis or stitching of the photos in the later stage can be greatly reduced. In particular, if the solution of the embodiment of the present disclosure is applied to a small plot, for example, when a plot can be completely covered after a plurality of photos taken at all the photographing points in a combined photographing point set are combined or stitched, the solution of the embodiment of the present disclosure can be significantly superior to the surveying and mapping at selected points in a traversal manner along parallel lines in relevant techniques, in terms of the number of surveying and mapping points and the difficulty of the stitching in the later stage.

. In an optional embodiment of the present disclosure, the obtaining a reference photographing location point corresponding to the area to be surveyed and mapped may include: detecting a touch operation of a user in a human-machine interface, and determining a screen location point according to the touch operation; and obtaining a geographic position coordinate matching the screen location point as the reference photographing location point from map data of the area to be surveyed and mapped currently displayed on the human-machine interface.

. In the embodiments of the present disclosure, the reference photographing location point may be determined from a point specified by the user in the human-machine interface. Optionally, a touch operation, such as a clicking or sliding operation or the like, performed by the user in the human-machine interface may be detected, and one of the screen location points in the human-machine interface is determined based on the touch operation performed by the user. Then, a geographic position coordinate matching the screen location point is determined as the reference photographing location point based on map data about the area to be surveyed and mapped that is currently displayed in the human-machine interface. Here, the map data may be latitude and longitude information or the like.

. In an optional embodiment of the present disclosure, the detecting a touch operation of a user in a human-machine interface, and determining a screen location point according to the touch operation may include at least one of the following:

. determining a touch point of the user as the screen location point if it is detected that the touch operation of the user is a single-point touch operation ;
. selecting a point on a line segment generated by the user's touch as the screen location point if it is detected that the touch operation of the user is a stroke touch operation; and

. selecting a point inside a box generated by the user's touch as the screen location point if it is detected that the touch operation of the user is a box-drawing touch operation.

. In the embodiments of the present disclosure, the determination of a screen location point based on a touch operation performed by a user in the human-machine interface may be specifically implemented in multiple manners. Optionally, a touch point corresponding to a single-point touch operation performed by the user may be determined as the screen location point. A point on a line segment generated by a stroke touch operation performed by the use may also be used as the screen location point. For example, a midpoint of the line segment may be used as the screen location point. A point inside a box generated by a box-drawing touch operation performed by the user may also be used as the screen location point, and for example, a central point of the box may be used as the screen location point.

. In an optional embodiment of the present disclosure, the obtaining a reference photographing location point corresponding to the area to be surveyed and mapped may include: obtaining a central point of the area to be surveyed and mapped as the reference photographing location point.

. In addition, in the embodiments of the present disclosure, the reference photographing location point may also be automatically generated by a control terminal that controls an unmanned aerial vehicle for surveying and mapping. For example, a central point of the area to be surveyed and mapped where the unmanned aerial vehicle for surveying and mapping is positioned is directly used as the reference photographing location point.

. In an optional embodiment of the present disclosure, the obtaining a reference photographing location point corresponding to the area to be surveyed and mapped may further include: obtaining a geographic position coordinate input by a user as the reference photographing location point.

. In the embodiments of the present disclosure, the geographic position coordinate input by the user may be directly used as the reference photographing location point. Optionally, the user may input the geographic position coordinate by means of a soft keyboard in the human-machine interface, a numeric keypad in the control terminal, voice input, or the like.

. In an optional embodiment of the present disclosure, the obtaining a reference photographing location point corresponding to the area to be surveyed and mapped may include: sending position query information to the unmanned aerial vehicle for surveying and mapping, and using a geographic position coordinate fed back by the unmanned aerial vehicle for surveying and mapping as the reference photographing location point. The unmanned aerial vehicle for surveying and mapping is preset at a position matching the area to be surveyed and mapped.

. In the embodiments of the present disclosure, the reference photographing location point may also be determined by position information specified by the user. Optionally, the user may send position query information to the unmanned aerial vehicle for surveying and mapping via the control terminal. For example, the user triggers a set identifier in the human-machine interface of the control terminal to send position query information to the unmanned aerial vehicle for surveying and mapping to query about the current position of the unmanned aerial vehicle for surveying and mapping. After receiving the position query information, the unmanned aerial vehicle for surveying and mapping acquires the current geographic position coordinate via its own positioning apparatus and feeds back the current geographic position coordinate to the control terminal. The control terminal may directly use a location point corresponding to the received geographic position coordinate as the reference photographing location point. Correspondingly, a ground projection point of the unmanned aerial vehicle for surveying and mapping is located inside the area to be surveyed and mapped when the unmanned aerial vehicle for surveying and mapping sends the geographic position coordinate to the control terminal.

. In an optional embodiment of the present disclosure, before the sending position query information to the unmanned aerial vehicle for surveying and mapping, the method may further include: receiving at least one flight control instruction for the unmanned aerial vehicle for surveying and mapping input by a user, and sending the flight control instruction to the unmanned aerial vehicle for surveying and mapping; and sending a hovering instruction to the unmanned aerial vehicle for surveying and mapping to control the unmanned aerial vehicle for surveying and mapping to hover at a current position when it is confirmed that a position confirmation response input by the user is received. The flight control instruction is set to control the unmanned aerial vehicle for surveying and mapping to move in air in a set direction and/or by a set distance.

. Correspondingly, if the reference photographing location point is determined by position information specified by the user, the user can input at least one flight control instruction for the unmanned aerial vehicle for surveying and mapping to the control terminal. The control terminal sends the flight control instructions input by the user to the unmanned aerial vehicle for surveying and mapping, so that the unmanned aerial vehicle for surveying and mapping can travel according to the flight control instructions. During the travelling of the unmanned aerial vehicle for surveying and mapping, if the user inputs a position confirmation response to the control terminal, for example, the user inputs a stop flight instruction as the position confirmation response, the control terminal may send a hovering instruction to the unmanned aerial vehicle for surveying and mapping to control the unmanned aerial vehicle for surveying and mapping to hover at the current position.

. In an optional embodiment of the present disclosure, the establishing a mapping relationship between a photographing point in a combined photographing point set and the reference photographing location point may include: establishing a mapping relationship between a photographing point selected by a user in the combined photographing point set and the reference photographing location point.

. Correspondingly, after the reference photographing location point is obtained, the user may arbitrarily select one photographing point from all the photographing points in the combined photographing point set, and a mapping relationship is established between the photographing point selected by the user from the combined photographing point set and the reference photographing location point.

. In an optional embodiment of the present disclosure, the establishing a mapping relationship between a photographing point in a combined photographing point set and the reference photographing location point may further include: establishing a mapping relationship between the central photographing point in the combined photographing point set and the reference photographing location point.

. In the embodiments of the present disclosure, optionally, a mapping relationship may be established directly between the central photographing point in the combined photographing point set and the reference photographing location point.

. In an optional embodiment of the present disclosure, the establishing a mapping relationship between a photographing point in a combined photographing point set and the reference photographing location point may further include: calculating a distance between the reference photographing location point and each of key locating points of the area to be surveyed and mapped, the key locating points including corner points of the area to be surveyed and mapped and a central point of the area to be surveyed and mapped; obtaining one of the key locating points closest to the reference photographing location point as a target reference point; and selecting, according to position information of the target reference point in the area to be surveyed and mapped, a photographing point matching the position information in the combined photographing point set to establish a mapping relationship with the reference photographing location point.

. In the embodiments of the present disclosure, optionally, the mapping relationship may also be determined based on a distance relationship between the reference photographing location point and each of key locating points in the area to be surveyed and mapped. Optionally, the corner points of the area to be surveyed and mapped and the central point of the area to be surveyed and mapped are used as the key locating points, a distance between the reference photographing location point and each of the key locating points of the area to be surveyed and mapped is calculated, and a key locating point closest to the reference photographing location point is obtained as a target reference point. Then, based on position information of the target reference point in the area to be surveyed and mapped, one photographing point matching the position information is selected from the combined photographing point set, and a mapping relationship is established between the photographing point and the reference photographing location point. For example, the target reference point is located in the upper left part of the area to be surveyed and mapped, one photographing point at the upper left corner may be selected from the combined photographing point set, and a mapping relationship is established between the photographing point and the reference photographing location point.

. Step 312: determining a plurality of auxiliary photographing location points corresponding to the reference photographing location point according to the mapping relationship and a preset relative position relationship between each two photographing points in the combined photographing point set.

. The auxiliary photographing location points may be other location points in the area to be surveyed and mapped that are different from the reference photographing location point.

. Further, after a mapping relationship between the reference photographing location point and one of the photographing points in the combined photographing point set is determined, a plurality of other auxiliary photographing location points corresponding to the reference photographing location point may be further determined based on the determined mapping relationship and on the preset relative position relationship between each two photographing points in the combined photographing point set.

. Exemplarily, assuming that a total of five photographing points are included in the combined photographing point set with a mapping relationship being established between a central photographing point in the photographing point set and the reference photographing location point, the other four auxiliary photographing location points corresponding to the reference photographing location point may be determined based on the position relationships between the other four photographing points and the central photographing point in the combined photographing point set.

. Step 313: using the reference photographing location point and the plurality of auxiliary photographing location points as sample points for surveying and mapping based on which an unmanned aerial vehicle for surveying and mapping performs surveying and mapping in the area to be surveyed and mapped.

. Correspondingly, upon the reference photographing location point and each auxiliary photographing location point are obtained, the reference photographing location point and the auxiliary photographing location points may be used as sample points for surveying and mapping based on which an unmanned aerial vehicle for surveying and mapping performs surveying and mapping in the area to be surveyed and mapped. The unmanned aerial vehicle for surveying and mapping may perform an aerial photography based on each of the sample points for surveying and mapping, and send the photos obtained by aerial photography to a corresponding control terminal or ground terminal, so that the control terminal can synthesize the acquired photos to obtain a final surveying and mapping image. Optionally, the unmanned aerial vehicle for surveying and mapping may implement the synthesis of multiple photos locally because the solution of the embodiment of the present disclosure can greatly reduce the number of surveying and mapping photos to be taken.

. For the photos acquired corresponding to all the sample points for surveying and mapping obtained by the method for planning sample points for surveying and mapping according to the embodiment of the present disclosure, it is not required that each successive two photos have a certain degree of overlap therebetween, and therefore the time consumed by processing of image data can be greatly reduced.

. Step 320: sending the surveying and mapping parameters to the unmanned aerial vehicle for surveying and mapping.

. By using the above technical solution, a reference photographing location point corresponding to an area to be surveyed and mapped is acquired, a mapping relationship is established between one photographing point in a combined photographing point set and the reference photographing location point, and at the same time a plurality of auxiliary photographing location points corresponding to the reference photographing location point are determined based on the mapping relationship and the preset relative position relationship between each two photographing points in the combined photographing point set, and then the reference photographing location point and the plurality of auxiliary photographing location points are used as the sample points for surveying and mapping based on which an unmanned aerial vehicle for surveying and mapping performs surveying and mapping in the area to be surveyed and mapped. In this way, a new method for planning sample points for surveying and mapping is proposed, and the prior parallel-line-based mobile planning mode is replaced with an overall planning of multiple surveying and mapping points based on a combined photographing point set, so that the problems of high cost and low surveying and mapping efficiency existing in the prior UAV-based aerial survey methods are solved, and the technical effects of reducing the surveying and mapping cost and improving the surveying and mapping efficiency are achieved.

. Fourth Embodiment

. FIG. 4a is a flowchart illustrating an operation control method for a control terminal according to a fourth embodiment of the present disclosure. This embodiment is described in detail on the basis of the foregoing embodiments. In this embodiment, another implementation manner of determining the surveying and mapping parameters matching the area to be surveyed and mapped through the control terminal is proposed. Correspondingly, as shown in FIG. 4a, the method of this embodiment may include the following steps.

. Step 410: using the operation area as an area to be surveyed and mapped and determining surveying and mapping parameters matching the area to be surveyed and mapped, wherein the surveying and mapping parameters include a plurality of sample points for surveying and mapping based on which an unmanned aerial vehicle for surveying and mapping performs surveying and mapping in the area to be surveyed and mapped.

. Correspondingly, Step 410 may include the following operations.

. Step 411: determining one or a plurality of combined photographing areas for surveying and mapping within the area to be surveyed and mapped according to area to be surveyed and mapped information and a combined photographing area corresponding to a combined photographing point set.

. The combined photographing area may be an area synthesized from the obtained photos after taking pictures according to each photographing point in the combined photographing point set, that is, the combined photographing area may be an overall photographing area that can be captured by the combined photographing point set. The information of the area to be surveyed and mapped may be related information of the area to be surveyed and mapped, such as the area shape, the area size, or the like of the area to be surveyed and mapped. The combined photographing area for surveying and mapping may be a photographing area having the same size with the combined photographing area. A combined photographing area for surveying and mapping corresponds to an actual photographing range in the plot, that is, the combined photographing area for surveying and mapping includes two key pieces of information, that is, the area size and the geographic position information of the area.

. In this embodiment of the present disclosure, before determining the sample points for surveying and mapping of the unmanned aerial vehicle for surveying and mapping, the combined photographing area corresponding to the combined photographing point set is firstly obtained, then one or a plurality of combined photographing areas for surveying and mapping may be determined in the area to be surveyed and mapped according to the information, such as area size and the like, of the combined photographing area and the area to be surveyed and mapped. If there is one combined photographing area for surveying and mapping, the combined photographing area for surveying and mapping can completely cover the area to be surveyed and mapped. If there are a plurality of combined photographing areas for surveying and mapping, the plurality of combined photographing areas for surveying and mapping, after being synthesized, can completely cover the area to be surveyed and mapped. For example, assuming that the combined photographing area is in a shape of square having an area of 10m*10m and the area to be surveyed and mapped is in a shape of rectangle having an area of 10m*20m, at least two combined photographing areas for surveying and mapping can completely cover the area to be surveyed and mapped.

. In an optional embodiment of the present disclosure, there is an overlapping area between each two of a plurality of photos taken according to a plurality of photographing points in the combined photographing point set; and/or

. there is an overlapping area between each two of the plurality of combined photographing areas for surveying and mapping determined in the area to be surveyed and mapped.

. The combined photographing areas for surveying and mapping are photographing areas formed by combining and/or stitching the plurality of photos after obtaining the plurality of photos taken according to the plurality of photographing points in the combined photographing point set; and a surveying and mapping map of the area to be surveyed and mapped is formed by combining and/or stitching each of the plurality of combined photographing areas for surveying and mapping.

. It is that the combined photographing area for surveying and mapping is the same as the combined photographing area, but a corresponding relationship between the combined photographing area and the area to be surveyed and mapped is not established. The combined photographing areas for surveying and mapping may be photographing areas formed by dividing the area to be surveyed and mapped, which are independent with each other, and the shape and size of a photographing area is the same as a combined photographing area. The overlapping area between the combined photographing areas for surveying and mapping can be set according to actual needs. For example, the overlapping area occupies 30% or 50% of the combined photographing areas for surveying and mapping. The embodiments of the present disclosure do not limit the numerical value of the overlapping area between the combined photographing areas for surveying and mapping.

. In the embodiments of the present disclosure, in order to enable the photos obtained by the unmanned aerial vehicle for surveying and mapping to be stitched together to form a complete image of the area to be surveyed and mapped, optionally, there is an overlapping area between each two of the plurality of photos taken by the unmanned aerial vehicle for surveying and mapping according to the plurality of photographing points in the combined photographing point set. Correspondingly, after the plurality of photos are taken according to the plurality of photographing points in the combined photographing point set, the plurality of photos may be combined and/or stitched to form a complete combined area.

The combined area may completely cover the area to be surveyed and mapped, or may cover only a part of the area to be surveyed and mapped, which is not limited in this embodiment. The overlapping area between the plurality of photos in the embodiments of the present disclosure does not mean that every two consecutive photos have the overlapping area. In the same way, in order to ensure that each photo obtained by the unmanned aerial vehicle for surveying and mapping can be synthesized according to an overlapping part to form a complete image, there should also be an overlapping area between the plurality of combined photographing areas for surveying and mapping determined in the area to be surveyed and mapped. Optionally, there may be an overlapping area between every two adjacent combined photographing areas for surveying and mapping, such that each of the combined photographing areas for surveying and mapping can be combined and/or stitched to form the surveying and mapping information of the area to be surveyed and mapped.

. In an optional embodiment of the present disclosure, the determining one or a plurality of combined photographing areas for surveying and mapping within the area to be surveyed and mapped according to information of the area to be surveyed and mapped and a combined photographing area corresponding to a combined photographing point set includes: selecting a locating point in the area to be surveyed and mapped; determining one combined photographing area for surveying and mapping in the area to be surveyed and mapped according to the locating point and the combined photographing area; if the combined photographing area for surveying and mapping does not completely cover the area to be surveyed and mapped, selecting a new locating point in the area to be surveyed and mapped, and returning to perform an operation of the determining one combined photographing area for surveying and mapping in the area to be surveyed and mapped according to the locating point and the combined photographing area, until all combined photographing areas for surveying and mapping being able to completely cover the area to be surveyed and mapped are determined.

. The locating point can be a location point in the area to be surveyed and mapped, and the locating point is set to position the combined photographing areas for surveying and mapping within the area to be surveyed and mapped.

. In the embodiments of the present disclosure, the locating point may be a location point selected in the area to be surveyed and mapped according to actual requirements, such as a corner point, a central point, or the like selected from the area to be surveyed and mapped. A locating point can be used to first determine a combined photographing area for surveying and mapping in the area to be surveyed and mapped. For example, if the area to be surveyed and mapped is of a rectangular shape, a top left vertex of the area to be surveyed and mapped may be selected as the locating point, and when the top left vertex of the combined photographing area coincides with the locating point, the combined photographing area can form a corresponding combined photographing area for surveying and mapping in the area to be surveyed and mapped. When determining a combined photographing area for surveying and mapping within the area to be surveyed and mapped by using the locating point and the combined photographing area, it is necessary to ensure that the combined photographing area for surveying and mapping can cover the area to be surveyed and mapped to the greatest extent. Correspondingly, after performing the determining a combined photographing area for surveying and mapping within the area to be surveyed and mapped by using the locating point and the combined photographing area, it can be determined whether the determined combined photographing area for surveying and mapping can completely cover the area to be surveyed and mapped. If the area to be surveyed and mapped can be completely covered, there is no need to determine other combined photographing areas for surveying and mapping. If the combined photographing area for surveying and mapping cannot completely cover the area to be surveyed and mapped, a new locating point should be selected from the area to be surveyed and mapped, and it is necessary to return to perform the operation of the determining a combined photographing area for surveying and mapping within the area to be surveyed and mapped by using the locating point and the combined photographing area, until all of the combined photographing areas for surveying and mapping which can completely cover the area to be surveyed and mapped are determined. When reselecting a new locating point, it should be noted that there is an overlapping area between the combined photographing area for surveying and mapping determined by the new locating point and an adjacent combined photographing area for surveying and mapping.

. In an optional embodiment of the present disclosure, before performing the determining one or a plurality of combined photographing areas for surveying and mapping within the area to be surveyed and mapped according to information of the area to be surveyed and mapped and a combined photographing area corresponding to a combined photographing point set, the operation control method for a control terminal further includes: detecting a touch operation of a user in a human-machine interface and obtaining a screen selection area matching the touch operation; and obtaining a geographic position area matching the screen selection area as the information of the area to be surveyed and mapped from map data currently displayed on the human-machine interface.

. The screen selection area may be an area formed by the touch operation of the user in the human-machine interface of the control terminal of the unmanned aerial vehicle for surveying and mapping, the screen selection area may be an area of any shape and size (not exceeding the size of the screen), and the shape and size of the screen selection area are not limited in the embodiments of the present disclosure.

. In the embodiments of the present disclosure, the area to be surveyed and mapped may be designated and generated in real time by the user who controls the unmanned aerial vehicle for surveying and mapping. For example, by detecting the touch operation of the user in the human-machine interface to obtain the screen selection area matching the touch operation, and determining a matching geographic position area for the screen selection area according to the map data currently displayed in the human-machine interface, the determined geographic position area is taken as the information of the area to be surveyed and mapped.

. In an optional embodiment of the present disclosure, the detecting a touch operation of a user in a human-machine interface and obtaining a screen selection area matching the touch operation may include the following:

. determining a closed area enclosed by connection lines of at least three touch points of the user as the screen selection area if it is detected that the touch operation of the user is a single-point touch operation; and/or

. using a box generated by the user's touch as the screen selection area if it is detected that the touch operation of the user is a box-drawing touch operation.

. Optionally, a closed area formed by the detected single-point touch operation of the user may be used as the screen selection area matching the touch operation. For example, a closed area enclosed by connection lines of at least three touch points of the user is determined as the screen selection area. Further, the box generated by the detected box-drawing touch operation of the user can be used as the screen selection area.

. Step 412: determining a plurality of photographing location points in the combined photographing area for surveying and mapping according to a preset relative position relationship between each two photographing points in the combined photographing point set.

. The photographing location point is a location point in the area to be surveyed and mapped, which has a matching geographic position coordinate.

. In the embodiments of the present disclosure, the photographing location point may be determined according to the preset relative position relationship between each two photographing points in the combined photographing point set.

. In an optional embodiment of the present disclosure, the determining a plurality of photographing location points in the combined photographing area for surveying and mapping according to a preset relative position relationship between each two photographing points in the combined photographing point set includes: mapping the central photographing point in the combined photographing point set to an area midpoint of the combined photographing area for surveying and mapping, and using the area midpoint as one photographing location point; and mapping, according to a relative position relationship between each of the peripheral photographing points in the combined photographing point set and the central photographing point, each of the peripheral photographing points respectively to the combined photographing area for surveying and mapping to form a plurality of mapping points, and using the plurality of mapping points as the photographing location points.

. In the embodiments of the present disclosure, since one combined photographing area for surveying and mapping corresponds to one combined photographing area, when determining the photographing location points, each photographing point in the combined photographing point set corresponding to the combined photographing area can be mapped to the combined photographing area for surveying and mapping to be used as a photographing location point. Optionally, during the mapping, the central photographing point in the combined photographing point set may be first mapped to an area midpoint of the combined photographing area for surveying and mapping, such that the area midpoint of the combined photographing area for surveying and mapping can be used as one photographing location point.

. Further, after determining the area midpoint of the combined photographing area for surveying and mapping as one photographing location point, according to the relative position relationship between each of the peripheral photographing points and the central photographing point in the combined photographing point set, each of the peripheral photographing points is respectively mapped to the combined photographing area for surveying and mapping to form a plurality of mapping points, and the plurality of mapping points are used as the photographing location points.

. FIG. 4b is a schematic diagram illustrating a distribution of each photographing location point according to the fourth embodiment of the present disclosure. In an embodiment, as shown in Figure 4b, the two central points 40 and 50 are respectively the area midpoints of the combined photographing areas for surveying and mapping. Correspondingly, the area midpoint 40 and four peripheral photographing location points 410 are located in one combined photographing area for surveying and mapping, and the area midpoint 50 and four peripheral photographing position potins 510 are located in another combined photographing area for surveying and mapping. The relative position relationship between the area midpoint and the peripheral photographing location points in the two combined photographing areas for surveying and mapping is the same as the preset relative position relationship between each peripheral photographing point and the central photographing point in the combined photographing point set.

. Step 413: using the plurality of photographing location points as sample points for surveying and mapping based on which an unmanned aerial vehicle for surveying and mapping performs surveying and mapping in the area to be surveyed and mapped.

. Correspondingly, upon the photographing location points are obtained, the photographing location points may be used as sample points for surveying and mapping based on which an unmanned aerial vehicle for surveying and mapping performs surveying and mapping in the area to be surveyed and mapped. The unmanned aerial vehicle for surveying and mapping may perform aerial photography based on each of the sample points for surveying and mapping, and send the photos obtained by aerial photography to a corresponding control terminal or ground terminal, so that the control terminal can synthesize the obtained photos to obtain a final surveying and mapping image. Optionally, the unmanned aerial vehicle for surveying and mapping may implement the synthesis of multiple photos locally because the solution of the embodiment of the present disclosure can greatly reduce the number of surveying and mapping photos to be taken.

. Step 420: sending the surveying and mapping parameters to the unmanned aerial vehicle for surveying and mapping.

. In an optional embodiment of the present disclosure, before the sending the surveying and mapping parameters to the unmanned aerial vehicle for surveying and mapping, the operation control method for a control terminal further includes: obtaining photographing parameters of a photographing apparatus carried by the unmanned aerial vehicle for surveying and mapping, the photographing parameters including single-photo photographing areas of the unmanned aerial vehicle for surveying and mapping at a set flight altitude, and each photographing point being corresponding to one of the single-photo photographing areas; and determining the preset relative position relationship between each two photographing points in the combined photographing point set according to a preset photo overlap degree index and the single-photo photographing areas. The surveying and mapping parameters further include the set flight altitude, and the set flight altitude is set to instruct the unmanned aerial vehicle for surveying and mapping to perform a flight photographing in the area to be surveyed and mapped at the set flight altitude. Before the obtaining photographing parameters of a photographing apparatus carried by the unmanned aerial vehicle for surveying and mapping, the operation control method for a control terminal further includes: calculating the set flight altitude according to a pixel width of the photographing apparatus, lens focal length of the photographing apparatus, and a ground pixel resolution.

. A single-photo photographing area is an actual area to be surveyed and mapped that can be captured by a single photo. The preset photo overlap degree index may be an overlap degree index set based on an actual requirement, such as 50%, 60%, 70%, or the like. Although the numerical value of the preset photo overlap degree index is not limited in the embodiment of the present disclosure, it should be noted that the preset photo overlap degree index should meet the requirement that a complete rectangle can be formed when all the photos are synthesized according to overlapping portions.

. In the embodiment of the present disclosure, before synthesizing the photos obtained by the unmanned aerial vehicle for surveying and mapping to obtain a final surveying and mapping image, it is necessary to determine a single-photo photographing area of the unmanned aerial vehicle for surveying and mapping at the set flight altitude, so as to determine the preset relative position relationship between each two photographing points in the combined photographing point set based on the size of a single photo photographing area. Each photographing point is corresponding to a single-photo photographing area, and for example, the photographing point is the midpoint or one of the vertices of the single-photo photographing area. The preset relative position relationship between each two photographing points in the combined photographing point set can be determined according to the preset photo overlap degree index and the single-photo photographing areas.

. The surveying and mapping parameters of the embodiments of the present disclosure further include the set flight altitude, and the set flight altitude is set to instruct the unmanned aerial vehicle for surveying and mapping to perform a flight photographing in the area to be surveyed and mapped at the set flight altitude. It can be understood that when a photographing apparatus such as a camera of the unmanned aerial vehicle for surveying and mapping has fixed photographing parameters, the set flight altitude of the unmanned aerial vehicle for surveying and mapping directly influences the ground pixel resolution. The ground pixel resolution, in turn, directly determines an area of the area to be surveyed and mapped that can be covered by a single photo. Therefore, before the area to be surveyed and mapped is aerially photographed by using the unmanned aerial vehicle for surveying and mapping, the set flight altitude of the unmanned aerial vehicle for surveying and mapping should be first determined. The set flight altitude of the unmanned aerial vehicle for surveying and mapping may be calculated based on the pixel width of the photographing apparatus, the lens focal length of the photographing apparatus, and the ground pixel resolution. Optionally, a formula where the flight altitude = the ground pixel resolution * the lens focal length / the pixel width may be obtained from a formula where the ground pixel resolution = the flight altitude * the pixel width / the lens focal length. The pixel width = a width dimension of a sensor of the photographing apparatus / a frame width.

. In an optional embodiment of the present disclosure, the obtaining photographing parameters of a photographing apparatus carried by the unmanned aerial vehicle for surveying and mapping includes: calculating the single-photo photographing areas of the unmanned aerial vehicle for surveying and mapping at the set flight altitude according to a pixel width of the photographing apparatus, a frame size of the photographing apparatus, and a ground pixel resolution.

. In the embodiments of the present disclosure, further, the single-photo photographing area of the unmanned aerial vehicle for surveying and mapping at the set flight altitude may be calculated based on the pixel width of the photographing apparatus, a frame size of the photographing apparatus, and the ground pixel resolution. Optionally, the single-photo photographing area = the ground pixel resolution * the frame size, and the ground pixel resolution = the flight altitude * the pixel width / the lens focal length.

. Namely, a length photographable in a single photo = the ground pixel resolution * the frame length; and a width photographable in a single photo = the ground pixel resolution * the frame width. For example, if the frame size is 3456 * 4608 and the ground pixel resolution is 0.05 m, the single-photo photographing area is 172.8 m * 230.4 m.

. In an optional embodiment of the present disclosure, the determining the preset relative position relationship between each two photographing points in the combined photographing point set according to a preset photo overlap degree index and the single-photo photographing areas includes: determining a size of a single photo according to a frame size and a pixel width of the photographing apparatus; constructing a two-dimensional coordinate system, and selecting a target point in the two-dimensional coordinate system as the central photographing point; generating a central photo in the two-dimensional coordinate system according to the central photographing point and the size of a single photo; generating four peripheral photos matching the photo overlap degree index with the central photo at an upper left corner, a lower left corner, an upper right corner, and a lower right corner of the central photo, respectively; determining a coordinate value of a peripheral photographing point corresponding to each of the four peripheral photos in the two-dimensional coordinate system according to a mapping relationship between the size of a single photo and the single-photo photographing areas; and determining the preset relative position relationship between each two photographing points in the combined photographing point set according to coordinate values of the central photographing point and each peripheral photographing point in the two-dimensional coordinate system.

. The target point may be any point in the two-dimensional coordinate system. For example, the target point may be the origin of the two-dimensional coordinate system.

. Optionally, in the determination of the preset relative position relationships between each two photographing points in the combined photographing point set, a size of a single photo may be first determined based on the frame size of the photographing apparatus and the pixel width of the photographing apparatus. Here, the size of a single photo = frame size * pixel width (namely, a single-photo length = frame length * pixel width; and a single photo width = frame width * pixel width). Then, a target point is selected in the two-dimensional coordinate system as the central photographing point of the combined photographing point set. Further, a central photo is generated in the two-dimensional coordinate system based on the central photographing point and the size of a single photo. For example, a corresponding central photo is generated using the central photographing point as the central point of the central photo and based on the size of a single photo. Then, based on the size of a single photo and the photo overlap degree index, four peripheral photos matching the central photo may be generated respectively in four orientations, i.e., the upper left corner, the lower left corner, the upper right corner, and the lower right corner of the central photo. Each of the central photo and the four peripheral photos matching therewith is not a photo taken in real sense, but is a rectangular region with the same size and shape as a single photo. Correspondingly, after the central photo and the four peripheral photos matching therewith are obtained, a coordinate value of respective peripheral photographing points corresponding to each peripheral photo in the two-dimensional coordinate system may be determined based on a mapping relationship between the size of a single photo and the single-photo photographing area. For example, if the size of a single photo is 10 cm * 10 cm, the photo overlap degree index is 50%, the peripheral photos corresponding to the upper left corner, the lower left corner, the upper right corner, and the lower right corner are respectively corresponding to single-photo photographing areas at the upper left corner, the lower left corner, the upper right corner, and the lower right corner, and a mapping relationship between the size of a single photo and the single-photo photographing area is 1:200, then the single-photo photographing area is correspondingly 20 m * 20 m. If the central points of the peripheral photos are used as the respective peripheral photographing points and the coordinate origin is used as the central photographing point, the respective peripheral photographing points may have coordinate values of (-10, 10), (-10, -10), (10, 10), and (10, -10) in unit of m, respectively. Correspondingly, upon the respective coordinate value corresponding to each peripheral photographing point is obtained, the preset relative position relationships between each two photographing points in the combined photographing point set may be determined based on the coordinate values of the central photographing point and all the peripheral photographing points in the two-dimensional coordinate system. For example, in the above example, there is a relative distance of 20 m between the peripheral photographing points located at the individual vertices in the combined photographing point set, and there is a relative distance of $10\sqrt{2}$ m between the central photographing point at the central point and each peripheral photographing point.

. In the above technical solutions, a combined photographing area corresponding to a combined photographing point set is obtained, one or a plurality of combined photographing areas for surveying and mapping within the area to be surveyed and mapped are determined according to the information of the area to be surveyed and mapped and a combined photographing area, then a plurality of photographing location points in the combined photographing area for surveying and mapping are determined according to a preset relative position relationship between each two photographing points in the combined photographing point set, and the plurality of photographing location points are used as sample points for surveying and mapping based on which an unmanned aerial vehicle for surveying and mapping performs surveying and mapping in the area to be surveyed and mapped. In this way, a new method for planning sample points for surveying and mapping is proposed, and the prior parallel-line-based mobile planning mode is replaced with an overall planning of multiple surveying and mapping points based on a combined photographing point set, so that the problems of high cost and low surveying and mapping efficiency existing in the prior UAV-based aerial survey methods are solved, and the technical effects of reducing the surveying and mapping cost and improving the surveying and mapping efficiency are achieved.

. Fifth Embodiment

. FIG. 5 is a flowchart illustrating an operation control method for an unmanned aerial vehicle for operation according to a fifth embodiment of the present disclosure. This embodiment is applicable to a case where an unmanned aerial vehicle for operation performs a flight operation according to an operation route, the method may be executed by an operation control device for an unmanned aerial vehicle for operation, and the device may be implemented by means of software and/or hardware, and may generally be integrated in an unmanned aerial vehicle apparatus and used in cooperation with an control terminal that is responsible for controlling the unmanned aerial vehicle. Correspondingly, as shown in FIG. 5, the method includes the following operations.

. Step 510: receiving an operation route sent by a control terminal.

. In the embodiments of the present disclosure, the unmanned aerial vehicle for operation may receive the operation route sent by the control terminal. By obtaining map tile data corresponding to an operation area, generating an area map of the operation area according to the map tile data and displaying the area map, at least one operation plot in the operation area is determined and an operation route corresponding to the operation plot is generated by the control terminal according to at least one area locating point selected by a user from the area map.

. Step 520: performing a flight operation in at least one operation plot according to the operation route.

. In the embodiments of the present disclosure, after receiving the operation route sent by the control terminal, the unmanned aerial vehicle for operation may perform a flight operation in at least one matching operation plot according to the operation route.

. In the embodiments of the present disclosure, the control terminal is used to obtain map tile data corresponding to an operation area to generate and display an area map of the operation area, determine at least one operation plot in the operation area according to at least one area locating point selected by a user from the area map, generate an operation route corresponding to the operation plot, and send the operation route to the unmanned aerial vehicle for operation, so that the unmanned aerial vehicle for operation may perform a flight operation in the at least one operation plot according to the operation route. In this way, an operation control system and method are proposed, and a control terminal is used to automatically generate a corresponding operation route for an operation plot selected by a user, which solves problems of high operating costs and low route generation efficiency of an existing unmanned aerial vehicle, and improves generation efficiency of an operation route of an unmanned aerial vehicle and intelligence of operation control of the unmanned aerial vehicle.

. Sixth Embodiment

. FIG. 6 is a schematic diagram illustrating an operation control device for a control terminal according to a sixth embodiment of the present disclosure. As shown in FIG. 6, the device includes: a map tile data obtaining module 610, a map displaying module 620, an operation plot determining module 630 and an operation route generating and sending module 640.

. The map tile data obtaining module 610 is configured to obtain map tile data corresponding to an operation area.

. The map displaying module 620 is configured to generate an area map of the operation area according to the map tile data and display the area map.

. The operation plot determining module 630 is configured to determine at least one operation plot in the operation area according to at least one area locating point selected by a user from the area map.

. The operation route generating and sending module 640 is configured to generate an operation route corresponding to the at least one operation plot, and send the operation route to an unmanned aerial vehicle for operation to make the unmanned aerial vehicle for operation perform a flight operation according to the operation route.

. The technical solution of this embodiment, the control terminal is used to obtain map tile data corresponding to an operation area to generate and display an area map of the operation area, determine at least one operation plot in the operation area according to at least one area locating point selected by a user from the area map, generate an operation route corresponding to the operation plot, and send the operation route to the unmanned aerial vehicle for operation, so that the unmanned aerial vehicle for operation may perform a flight operation in the at least one operation plot according to the operation route. In this way, an operation control system and method are proposed, and a control terminal is used to automatically generate a corresponding operation route for an operation plot selected by a user, so that problems of high operating costs and low route generation efficiency of an existing unmanned aerial vehicle are solved, and the generation efficiency of an operation route of an unmanned aerial vehicle and intelligence of operation control of the unmanned aerial vehicle are improved.

. Optionally, the device further includes: a surveying and mapping parameter determining module, configured to use the operation area as an area to be surveyed and mapped and determine surveying and mapping parameters matching the area to be surveyed and mapped, wherein the surveying and mapping parameters include a plurality of sample points for surveying and mapping based on which an unmanned aerial vehicle for surveying and mapping performs surveying and mapping in the area to be surveyed and mapped; and a surveying and mapping parameter sending module, configured to send the surveying and mapping parameters to the unmanned aerial vehicle for surveying and mapping, wherein the surveying and mapping parameters are set to instruct the unmanned aerial vehicle for surveying and mapping to perform a flight photographing in the area to be surveyed and mapped to obtain a surveying and mapping photo collection corresponding to the plurality of sample points for surveying and mapping to generate the map tile data of the area to be surveyed and mapped.

. Optionally, the surveying and mapping parameter determining module includes: a photographing location point obtaining unit, configured to obtain a reference photographing location point corresponding to the area to be surveyed and mapped, and establish a mapping relationship between a photographing point in a combined photographing point set and the reference photographing location point; an auxiliary photographing location point determining unit, configured to determine a plurality of auxiliary photographing location points corresponding to the reference photographing location point according to the mapping relationship and a preset relative position relationship between each two photographing points in the combined photographing point set; and a first sample point for surveying and mapping determining unit, configured to use the reference photographing location point and the plurality of auxiliary photographing location points as sample points for surveying and mapping based on which an unmanned aerial vehicle for surveying and mapping performs surveying and mapping in the area to be surveyed and mapped.

. Optionally, the surveying and mapping parameter determining module includes: a combined photographing area for surveying and mapping determining unit, configured to determine one or a plurality of combined photographing areas for surveying and mapping within the area to be surveyed and mapped according to information of the area to be surveyed and mapped and a combined photographing area corresponding to a combined photographing point set; a photographing location point determining unit, configured to determine a plurality of photographing location points in the combined photographing area for surveying and mapping according to a preset relative position relationship between each two photographing points in the combined photographing point set; and a second sample point for surveying and mapping determining unit, configured to use the plurality of photographing location points as sample points for surveying and mapping based on which an unmanned aerial vehicle for surveying and mapping performs surveying and mapping in the area to be surveyed and mapped.

. Optionally, there is an overlapping area between each two of a plurality of photos taken according to a plurality of photographing points in the combined photographing point set; and/or there is an overlapping area between each two of the plurality of combined photographing areas for surveying and mapping determined in the area to be surveyed and mapped. The combined photographing areas for surveying and mapping are photographing areas formed by combining and/or stitching the plurality of photos after obtaining the plurality of photos taken according to the plurality of photographing points in the combined photographing point set; and a surveying and mapping map of the area to be surveyed and mapped is formed by combining and/or stitching each of the combined photographing areas for surveying and mapping.

. Optionally, photographing points in the combined photographing point set include a central photographing point and four peripheral photographing points, the four peripheral photographing points are four vertices of a rectangle centered on the central photographing point, respectively; and a composite photo obtained by photographing based on all the photographing points in the combined photographing point set is of a rectangular shape.

. Optionally, the photographing location point obtaining unit is configured to detect a touch operation of a user in a human-machine interface and determine a screen location point according to the touch operation, and obtain a geographic position coordinate matching the screen location point as the reference photographing location point from map data of the area to be surveyed and mapped currently displayed on the human-machine interface.

. Optionally, the photographing location point obtaining unit is configured to: determine a touch point of the user as the screen location point if it is detected that the touch operation of the user is a single-point touch operation; select a point on a line segment generated by the user's touch as the screen location point if it is detected that the touch operation of the user is a stroke touch operation; and select a point inside a box generated by the user's touch as the screen location point if it is detected that the touch operation of the user is a box-drawing touch operation.

. Optionally, the photographing location point obtaining unit is configured to obtain a central point of the area to be surveyed and mapped as the reference photographing location point.

. Optionally, the photographing location point obtaining unit is configured to send position query information to the unmanned aerial vehicle for surveying and mapping, and use a geographic position coordinate fed back by the unmanned aerial vehicle for surveying and mapping as the reference photographing location point. The unmanned aerial vehicle for surveying and mapping is preset at a position matching the area to be surveyed and mapped.

. Optionally, the device further includes: a flight control instruction sending module, configured to receive at least one flight control instruction for the unmanned aerial vehicle for surveying and mapping input by a user, and send the flight control instruction to the unmanned aerial vehicle for surveying and mapping; and a hovering instruction sending module, configured to send a hovering instruction to the unmanned aerial vehicle for surveying and mapping to control the unmanned aerial vehicle for surveying and mapping to hover at a current position when it is confirmed that a position confirmation response input by the user is received. The flight control instruction is set to control the unmanned aerial vehicle for surveying and mapping to move in air in a set direction and/or by a set distance.

. Optionally, the photographing location point obtaining unit is configured to obtain a geographic position coordinate input by a user as the reference photographing location point.

. Optionally, the photographing location point obtaining unit is configured to establish a mapping relationship between a photographing point selected by a user in the combined photographing point set and the reference photographing location point.

. Optionally, the photographing location point obtaining unit is configured to establish a mapping relationship between the central photographing point in the combined photographing point set and the reference photographing location point.

. Optionally, the photographing location point obtaining unit is configured to: calculate a distance between the reference photographing location point and each of key locating points of the area to be surveyed and mapped, the key locating points including corner points of the area to be surveyed and mapped and a central point of the area to be surveyed and mapped; obtain one of the key locating points closest to the reference photographing location point as a target reference point; and select, according to position information of the target reference point in the area to be surveyed and mapped, a photographing point matching the position information in the combined photographing point set to establish a mapping relationship with the reference photographing location point.

. Optionally, the combined photographing area for surveying and mapping determining unit is configured to: select a locating point in the area to be surveyed and mapped; determine one combined photographing area for surveying and mapping in the area to be surveyed and mapped according to the locating point and the combined photographing area; and if the combined photographing area for surveying and mapping does not completely cover the area to be surveyed and mapped, select a new locating point in the area to be surveyed and mapped, and return to perform an operation of the determine one combined photographing area for surveying and mapping in the area to be surveyed and mapped according to the locating point and the combined photographing area, until all combined photographing areas for surveying and mapping being able to completely cover the area to be surveyed and mapped are determined.

. Optionally, the photographing location point determining unit is configured to: map the central photographing point in the combined photographing point set to an area midpoint of the combined photographing area for surveying and mapping, and use the area midpoint as one photographing location point; and map, according to a relative position relationship between each of the peripheral photographing points in the combined photographing point set and the central photographing point, each of the peripheral photographing points respectively to the combined photographing area for surveying and mapping to form a plurality of mapping points, and use the plurality of mapping points as the photographing location points.

. Optionally, the device further includes: a screen selection area obtaining module, configured to detect a touch operation of a user in a human-machine interface and obtain a screen selection area matching the touch operation; and a module for obtaining information of the area to be surveyed and mapped , configured to obtain a geographic position area matching the screen selection area as the information of the area to be surveyed and mapped from map data currently displayed on the human-machine interface.

. Optionally, the screen selection area obtaining module is configured to: determine a closed area enclosed by connection lines of at least three touch points of the user as the screen selection area if it is detected that the touch operation of the user is a single-point touch operation; and/or use a box generated by the user's touch as the screen selection area if it is detected that the touch operation of the user is a box-drawing touch operation.

. Optionally, the device further includes: a photographing parameter obtaining module, configured to obtain photographing parameters of a photographing apparatus carried by the unmanned aerial vehicle for surveying and mapping, the photographing parameters including single-photo photographing areas of the unmanned aerial vehicle for surveying and mapping at a set flight altitude, and each photographing point being corresponding to one of the single-photo photographing areas; and a relative position relationship determining module, configured to determine the preset relative position relationship between each two photographing points in the combined photographing point set according to a preset photo overlap degree index and the single-photo photographing areas. The surveying and mapping parameters further include the set flight altitude, and the set flight altitude is set to instruct the unmanned aerial vehicle for surveying and mapping to perform a flight photographing in the area to be surveyed and mapped at the set flight altitude.

• Optionally, the relative position relationship determining module is configured to: determine a size of a single photo according to a frame size and a pixel width of the photographing apparatus; construct a two-dimensional coordinate system, and select a target point in the two-dimensional coordinate system as the central photographing point; generate a central photo in the two-dimensional coordinate system according to the central photographing point and the size of a single photo; generate four peripheral photos matching the photo overlap degree index with the central photo at an upper left corner, a lower left corner, an upper right corner, and a lower right corner of the central photo, respectively; determine a coordinate value of a peripheral photographing point corresponding to each of the four peripheral photos in the two-dimensional coordinate system according to a mapping relationship between the size of a single photo and the single-photo photographing areas; and determine the preset relative position relationship between each two photographing points in the combined photographing point set according to coordinate values of the central photographing point and each peripheral photographing point in the two-dimensional coordinate system.

. Optionally, the device further includes: a set flight altitude calculating module, configured to calculate the set flight altitude according to a pixel width of the photographing apparatus, lens focal length of the photographing apparatus, and a ground pixel resolution.

. Optionally, the photographing parameter obtaining module is configured to calculate the single-photo photographing areas of the unmanned aerial vehicle for surveying and mapping at the set flight altitude according to a pixel width of the photographing apparatus, a frame size of the photographing apparatus, and a ground pixel resolution.

. The operation control device for a control terminal described above may execute an operation control method for a control terminal according to any embodiment of the present disclosure, and has functional modules and advantageous effects corresponding to the execution of the method. For the technical details that are not described in detail in this embodiment, reference may be made to the operation control method for a control terminal according to any embodiment of the present disclosure.

. Seventh Embodiment

. FIG. 7 is a schematic diagram illustrating an operation control device for an unmanned aerial vehicle for operation according to a seventh embodiment of the present disclosure. As shown in FIG. 7, the device includes: an operation route receiving module 710 and a flight operation module 720.

. The operation route receiving module 710 is configured to receive an operation route sent by a control terminal.

. The flight operation module 720 is configured to perform a flight operation in at least one operation plot according to the operation route.

. In the embodiments of the present disclosure, the control terminal is used to obtain map tile data corresponding to an operation area to generate and display an area map of the operation area, determine at least one operation plot in the operation area according to at least one area locating point selected by a user from the area map, generate an operation route corresponding to the operation plot, and send the operation route to the unmanned aerial vehicle for operation, so that the unmanned aerial vehicle for operation may perform a flight operation in the at least one operation plot according to the operation route. In this way, an operation control system and method are proposed, and a control terminal is used to automatically generate a corresponding operation route for an operation plot selected by a user, which solves problems of high operating costs and low route generation efficiency of an existing unmanned aerial vehicle, and improves generation efficiency of an operation route of an unmanned aerial vehicle and intelligence of operation control of the unmanned aerial vehicle.

. The operation control device for an unmanned aerial vehicle for operation described above may execute an operation control method for an unmanned aerial vehicle for operation according to any embodiment of the present disclosure, and has functional modules and advantageous effects corresponding to the execution of the method. For the technical details that are not described in detail in this embodiment, reference may be made to the operation control method for an unmanned aerial vehicle for operation according to any embodiment of the present disclosure.

. Eighth Embodiment

. FIG. 8 is a schematic structural diagram illustrating a control terminal according to an eighth embodiment of the present disclosure. FIG. 8 shows a block diagram of a control terminal 812 suitable for implementing embodiments of the present disclosure. The control terminal 812 shown in FIG. 8 is merely an example and is not intended to limit, in any way, the functions and applicable scope of the embodiments of the present disclosure.

. As shown in FIG. 8, the control terminal 812 is embodied in the form of a general-purpose computing device. The components of the control terminal 812 may include, but are not limited to, one or more processors 816, a storage apparatus 828, and a bus 818 that couples different system components (including the storage apparatus 828 and the one or more processors 816).

. The bus 818 represents one or more of several types of bus structures, including a memory bus, a memory controller, a peripheral bus, an accelerated graphics port, and local bus in a processor or a bus structure using any of a variety of bus architectures. By way of example, such architectures include, but are not limited to, Industry Standard Architecture (ISA) bus, Micro Channel Architecture (MCA) bus, Enhanced ISA bus, Video Electronics Standards Association (VESA) local bus, and Peripheral Component Interconnect (PCI) bus.

. The control terminal 812 typically includes a variety of computer system readable media. Such media may be any available media that are accessible by the control terminal 812, including both volatile and non-volatile media, removable and non-removable media.

. The storage apparatus 828 may include computer system readable media in the form of volatile memory, such as a Random Access Memory (RAM) 830 and/or a cache memory 832. The control terminal 812 may further include other removable/non-removable, volatile/non-volatile computer system storage media. By way of example, a storage system 834 can be provided for reading from and writing to a non-removable, non-volatile magnetic medium (not shown in FIG. 8 and typically called as a "hard drive"). Although the medium is not shown in FIG. 8, a magnetic disk drive for reading from and writing to a removable, non-volatile magnetic disk (e.g., a "floppy disk"), and an optical disk drive for reading from or writing to a removable, non-volatile optical disk such as a Compact Disc-Read Only Memory (CD-ROM), a Digital Video Disc-Read Only Memory (DVD-ROM) or other optical media may be provided. In such cases, each drive may be connected with the bus 818 via one or more data media interfaces. The storage apparatus 828 may include at least one program product having a set (e.g., at least one) of program modules that are configured to carry out the functions of each embodiment of the present disclosure.

. A program 836, having a set (at least one) of program modules 826, may be stored in the storage apparatus 828 by way of example, wherein such program modules 826 include, but are not limited to, an operating system, one or more application programs, other program modules, and program data. Each or some combination of these examples may include an implementation of a networking environment. The program modules 826 generally carry out the functions and/or methods of the embodiments described in the present disclosure.

. The control terminal 812 may also communicate with one or more external devices 814 (such as a keyboard, a pointing device, a camera, a display 824, etc.), and may also communicate with one or more devices that enable a user to interact with the control terminal 812, and/or any devices (e.g., a network card, a modem, etc.) that enable the control terminal 812 to communicate with one or more other computing devices. Such communication may occur via an input/output (I/O) interface 822. Still yet, the control terminal 812 may communicate with one or more networks (such as a Local Area Network (LAN), a Wide Area Network (WAN), and/or a public network (e.g., the Internet)) via a network adapter 820. As shown in the figure, the network adapter 820 communicates with the other modules of the control terminal 812 via the bus 818. It should be understood that although not shown in the figure, other hardware and/or software modules could be used in conjunction with the control terminal 812, which include, but are not limited to: microcode, device drivers, redundant processing units, external disk drive arrays, Redundant Arrays of Independent Disks (RAID) systems, tape drives, data archival storage systems, etc.

. The processor 816 executes the respective functional applications and data processing, for example implementation of the operation control method for a control terminal according to the foregoing embodiments of the present disclosure, by running a program stored in the storage apparatus 828.

. In other words, when executing the program, the processing unit implements operations of: obtaining map tile data corresponding to an operation area; generating an area map of the operation area according to the map tile data and displaying the area map; determining at least one operation plot in the operation area according to at least one area locating point selected by a user from the area map; and generating an operation route corresponding to the at least one operation plot, and sending the operation route to an unmanned aerial vehicle for operation to make the unmanned aerial vehicle for operation perform a flight operation according to the operation route.

. Ninth Embodiment

. The ninth embodiment is an unmanned aerial vehicle for operation provided by the embodiments of the present disclosure, which is configured to execute an operation control method for an unmanned aerial vehicle for operation according to any embodiment of the present disclosure. The unmanned aerial vehicle for operation includes: one or more processors; a storage apparatus, configured to store one or more programs. When the one or more programs are executed by the one or more processors, the one or more processors implement an operation control method for an unmanned aerial vehicle for operation according to any embodiment of the present disclosure. The operation control method for an unmanned aerial vehicle for operation includes: receiving an operation route sent by a control terminal; and performing a flight operation in at least one operation plot according to the operation route. The structure and details of the unmanned aerial vehicle for operation may be found in FIG. 8 and the eighth embodiment.

. Tenth Embodiment

. The tenth embodiment of the present disclosure further provides a computer storage medium storing a computer program.

. The computer program, when executed by a computer processor, executes an operation control method for a control terminal as described in any one of the foregoing embodiments of the present disclosure, the method including: obtaining map tile data corresponding to an operation area; generating an area map of the operation area according to the map tile data and displaying the area map; determining at least one operation plot in the operation area according to at least one area locating point selected by a user from the area map; and generating an operation route corresponding to the at least one operation plot, and sending the operation route to an unmanned aerial vehicle for operation to make the unmanned aerial vehicle for operation perform a flight operation according to the operation route.

. Any combination of one or more computer readable media may be used as the computer storage medium of the embodiment of the present disclosure. The computer readable medium may be a computer readable signal medium or a computer readable storage medium. The computer readable storage medium may be, for example but not limited to, an electronic, magnetic, optical, electromagnetic, infrared, or semiconductor system, apparatus, or device, or any combination of the foregoing. More specific examples (a non-exhaustive list) of the computer readable storage medium include: an electrical connection having one or more wires, a portable computer diskette, a hard disk, a RAM, a Read-Only Memory (ROM), an Erasable Programmable Read-Only Memory (EPROM or Flash memory), an optical fiber, a portable Compact Disc Read-Only Memory (CD-ROM), an optical storage device, a magnetic storage device, or any suitable combination of the foregoing. In the context of this document, the computer readable storage medium may be any tangible medium that can contain, or store a program, and the program can be used by or used in connection with an instruction execution system, apparatus or device.

. The computer readable signal medium may include a data signal carrying computer readable program codes therein, with the signal propagated in baseband or as part of a carrier wave. Such a propagated data signal may take any of a variety of forms, including, but not limited to, an electro-magnetic signal, an optical signal, or any suitable combination thereof. The computer readable signal medium may be any computer readable medium other than a computer readable storage medium and that can communicate, propagate, or transport a program for use by or in connection with an instruction execution system, apparatus, or device.

. Program code embodied on a computer readable medium may be transmitted using any appropriate medium, including but not limited to wireless, wireline, optical fiber cable, Radio Frequency (RF), or the like, or any suitable combination of the foregoing.

. Computer program code for carrying out operations of the present disclosure may be written in one or more programming languages or any combination thereof, including an object-oriented programming language such as Java, Smalltalk, C++ or the like, and conventional procedural programming languages such as the "C" programming language or similar programming languages. The program code may be executed entirely on the user's computer, executed partly on the user's computer, executed as a stand-alone software package, executed partly on the user's computer and partly on a remote computer or executed entirely on the remote computer or remote server. In a scenario involving a remote computer, the remote computer may be connected with the user's computer via any type of network, including LAN or WAN, or may be connected with an external computer (for example, via the Internet using an Internet Service Provider).

INDUSTRIAL APPLICABILITY

. In the embodiments of the present disclosure, an operation control system, an operation control method and device, an apparatus and a medium are proposed, and a control terminal is used to automatically generate a corresponding operation route for an operation plot selected by a user, which solves problems of high operating costs and low route generation efficiency of an existing unmanned aerial vehicle, and improves generation efficiency of an operation route of an unmanned aerial vehicle and intelligence of operation control of the unmanned aerial vehicle.

**Claims**

1. An operation control system, comprising a control terminal and an unmanned aerial vehicle for operation,

   wherein the control terminal is configured to obtain map tile data corresponding to an operation area, generate an area map of the operation area according to the map tile data and display the area map, determine at least one operation plot in the operation area according to at least one area locating point selected by a user from the area map, generate an operation route corresponding to the at least one operation plot, and send the operation route to the unmanned aerial vehicle for operation; and

the unmanned aerial vehicle for operation is configured to receive the operation route and perform a flight operation in the at least one operation plot according to the operation route.

2. The operation control system according to claim 1, further comprising an unmanned aerial vehicle for surveying and mapping,

wherein the control terminal is further configured to: use the operation area as an area to be surveyed and mapped, determine surveying and mapping parameters matching the area to be surveyed and mapped, and send the surveying and mapping parameters to the unmanned aerial vehicle for surveying and mapping, wherein the surveying and mapping parameters comprise a plurality of sample points for surveying and mapping based on which an unmanned aerial vehicle for surveying and mapping performs surveying and mapping in the area to be surveyed and mapped; and

the unmanned aerial vehicle for surveying and mapping is configured to: receive the surveying and mapping parameters, and perform a flight photographing in the area to be surveyed and mapped according to the surveying and mapping parameters to obtain a surveying and mapping photo collection corresponding to the plurality of sample points for surveying and mapping, wherein the surveying and mapping photo collection is set to generate the map tile data of the area to be surveyed and mapped.

3. The operation control system according to claim 2, further comprising a ground terminal,

wherein the ground terminal is configured to obtain the surveying and mapping photo collection, perform at least one of photo combination and photo stitching on a plurality of photos of the surveying and mapping photo collection to obtain a surveying and mapping map corresponding to the area to be surveyed and mapped, and generate the map tile data corresponding to the area to be surveyed and mapped according to the surveying and mapping map; and

the control terminal is configured to obtain the map tile data corresponding to the operation area from the ground terminal.

4. An operation control method for a control terminal, applied to the operation control system according to any one of claims 1-3, comprising:

obtaining map tile data corresponding to an operation area;

generating an area map of the operation area according to the map tile data and displaying the area map;

determining at least one operation plot in the operation area according to at least one area locating point selected by a user from the area map; and

generating an operation route corresponding to the at least one operation plot, and sending the operation route to an unmanned aerial vehicle for operation to enable the unmanned aerial vehicle for operation to perform a flight operation according to the operation route.

5. The method according to claim 4, before the obtaining map tile data corresponding to an operation area, further comprising:

using the operation area as an area to be surveyed and mapped and determining surveying and mapping parameters matching the area to be surveyed and mapped, wherein the surveying and mapping parameters comprise a plurality of sample points for surveying and mapping based on which an unmanned aerial vehicle for surveying and mapping performs surveying and mapping in the area to be surveyed and mapped; and

sending the surveying and mapping parameters to the unmanned aerial vehicle for surveying and mapping, wherein the surveying and mapping parameters are set to instruct the unmanned aerial vehicle for surveying and mapping to perform a flight photographing in the area to be surveyed and mapped to obtain a surveying and mapping photo collection corresponding to the plurality of sample points for surveying and mapping to generate the map tile data of the area to be surveyed and mapped.

6. The method according to claim 5, wherein the determining surveying and mapping parameters matching the area to be surveyed and mapped comprises:

obtaining a reference photographing location point corresponding to the area to be surveyed and mapped, and establishing a mapping relationship between a photographing point in a combined photographing point set and the reference photographing location point;

determining a plurality of auxiliary photographing location points corresponding to the reference photographing location point according to the mapping relationship and a preset relative position relationship between each two photographing points in the combined photographing point set; and

using the reference photographing location point and the plurality of auxiliary photographing location points as sample points for surveying and mapping based on which an unmanned aerial vehicle for surveying and mapping performs surveying and mapping in the area to be surveyed and mapped.

7. The method according to claim 5, wherein the determining surveying and mapping parameters matching the area to be surveyed and mapped comprises:

determining one or a plurality of combined photographing areas for surveying and mapping within the area to be surveyed and mapped according to information of the area to be surveyed and mapped and a combined photographing area corresponding to a combined photographing point set;

determining a plurality of photographing location points in the combined photographing area for surveying and mapping according to a preset relative position relationship between each two photographing points in the combined photographing point set; and

using the plurality of photographing location points as sample points for surveying and mapping based on which an unmanned aerial vehicle for surveying and mapping performs surveying and mapping in the area to be surveyed and mapped.

8. The method according to claim 7, wherein there is an overlapping area between each two of a plurality of photos taken according to a plurality of photographing points in the combined photographing point set; and/or

there is an overlapping area between each two of the plurality of combined photographing areas for surveying and mapping determined in the area to be surveyed and mapped,

wherein the combined photographing areas for surveying and mapping are photographing areas formed by performing at least one of photo combination and photo stitching on the plurality of photos after obtaining the plurality of photos taken according to the plurality of photographing points in the combined photographing point set; and a surveying and mapping map of the area to be surveyed and mapped is formed by performing at least one of photo combination and photo stitching on each of the combined photographing areas for surveying and mapping.

9. The method according to claim 6 or 7, wherein photographing points in the combined photographing point set comprise a central photographing point and four peripheral photographing points, and the four peripheral photographing points are four vertices of a rectangle centered on the central photographing point, respectively; and

a composite photo obtained by photographing based on all the photographing points in the combined photographing point set is of a rectangular shape.

10. The method according to claim 6, wherein the obtaining a reference photographing location point corresponding to the area to be surveyed and mapped comprises:

detecting a touch operation of a user in a human-machine interface, and determining a screen location point according to the touch operation; and

obtaining a geographic position coordinate matching the screen location point as the reference photographing location point from map data of the area to be surveyed and mapped currently displayed on the human-machine interface.

11. The method according to claim 10, wherein the detecting a touch operation of a user in a human-machine interface, and determining a screen location point according to the touch operation comprises at least one of the following:

determining a touch point of the user as the screen location point if it is detected that the touch operation of the user is a single-point touch operation;

selecting a point on a line segment generated by the user's touch as the screen location point if it is detected that the touch operation of the user is a stroke touch operation; and

selecting a point inside a box generated by the user's touch as the screen location point if it is detected that the touch operation of the user is a box-drawing touch operation.

12. The method according to claim 6, wherein the obtaining a reference photographing location point corresponding to the area to be surveyed and mapped comprises:

obtaining a central point of the area to be surveyed and mapped as the reference photographing location point.

13. The method according to claim 6, wherein the obtaining a reference photographing location point corresponding to the area to be surveyed and mapped comprises:

sending position query information to the unmanned aerial vehicle for surveying and mapping, and using a geographic position coordinate fed back by the unmanned aerial vehicle for surveying and mapping as the reference photographing location point,
wherein the unmanned aerial vehicle for surveying and mapping is preset at a position matching the area to be surveyed and mapped.

14. The method according to claim 13, before the sending position query information to the unmanned aerial vehicle for surveying and mapping, further comprising:

receiving at least one flight control instruction for the unmanned aerial vehicle for surveying and mapping input by a user, and sending the flight control instruction to the unmanned aerial vehicle for surveying and mapping; and
sending a hovering instruction to the unmanned aerial vehicle for surveying and mapping to control the unmanned aerial vehicle for surveying and mapping to hover at a current position when it is confirmed that a position confirmation response input by the user is received,
wherein the flight control instruction is set to control the unmanned aerial vehicle for surveying and mapping to perform at least one of the following in air: moving in a set direction and moving by a set distance.

15. The method according to claim 6, wherein the obtaining a reference photographing location point corresponding to the area to be surveyed and mapped comprises:
obtaining a geographic position coordinate input by a user as the reference photographing location point.

16. The method according to claim 6, wherein the establishing a mapping relationship between a photographing point in a combined photographing point set and the reference photographing location point comprises:
establishing a mapping relationship between a photographing point selected by a user from the combined photographing point set and the reference photographing location point.

17. The method according to claim 9, wherein the establishing a mapping relationship between a photographing point in a combined photographing point set and the reference photographing location point comprises:
establishing a mapping relationship between the central photographing point in the combined photographing point set and the reference photographing location point.

18. The method according to claim 9, wherein the establishing a mapping relationship between a photographing point in a combined photographing point set and the reference photographing location point comprises:

calculating a distance between the reference photographing location point and each of key locating points of the area to be surveyed and mapped, the key locating points comprising corner points of the area to be surveyed and mapped and a central point of the area to be surveyed and mapped;
obtaining one of the key locating points closest to the reference photographing location point as a target reference point; and
selecting, according to position information of the target reference point in the area to be surveyed and mapped, a photographing point matching the position information from the combined photographing point set to establish a mapping relationship with the reference photographing location point.

19. The method according to claim 7, wherein the determining one or a plurality of combined photographing areas for surveying and mapping within the area to be surveyed and mapped according to information of the area to be surveyed and mapped and a combined photographing area corresponding to a combined photographing point set comprises:

selecting a locating point from the area to be surveyed and mapped;
determining one combined photographing area for surveying and mapping in the area to be surveyed and mapped according to the locating point and the combined photographing area; and
if the combined photographing area for surveying and mapping fails to completely cover the area to be surveyed and mapped, selecting a new locating point in the area to be surveyed and mapped, and returning to perform an operation of the determining one combined photographing area for surveying and mapping in the area to be surveyed and mapped according to the locating point and the combined photographing area, until all combined photographing areas for surveying and mapping being able to completely cover the area to be surveyed and mapped are determined.

20. The method according to claim 9, wherein the determining a plurality of photographing location points in the combined photographing area for surveying and mapping according to a preset relative position relationship between each two photographing points in the combined photographing point set comprises:

> mapping the central photographing point in the combined photographing point set to an area midpoint of the combined photographing area for surveying and mapping, and using the area midpoint as one photographing location point; and
> mapping, according to a preset relative position relationship between each of the peripheral photographing points in the combined photographing point set and the central photographing point, each of the peripheral photographing points respectively to the combined photographing area for surveying and mapping to form a plurality of mapping points, and using the plurality of mapping points as the photographing location points.

21. The method according to claim 7, before the determining one or a plurality of combined photographing areas for surveying and mapping within the area to be surveyed and mapped according to information of the area to be surveyed and mapped and a combined photographing area corresponding to a combined photographing point set, further comprising:

> detecting a touch operation of a user in a human-machine interface and obtaining a screen selection area matching the touch operation; and
> obtaining a geographic position area matching the screen selection area as the information of the area to be surveyed and mapped from map data currently displayed on the human-machine interface.

22. The method according to claim 21, wherein the detecting a touch operation of a user in a human-machine interface and obtaining a screen selection area matching the touch operation comprises at least one of the following:

> determining a closed area enclosed by connection lines of at least three touch points of the user as the screen selection area if it is detected that the touch operation of the user is a single-point touch operation;
> using a box generated by the user's touch as the screen selection area if it is detected that the touch operation of the user is a box-drawing touch operation;
> determining a closed area enclosed by connection lines of at least three touch points of the user as the screen selection area if it is detected that the touch operation of the user is a single-point touch operation; and using a box generated by the user's touch as the screen selection area if it is detected that the touch operation of the user is a box-drawing touch operation.

23. The method according to claim 9, before the sending the surveying and mapping parameters to the unmanned aerial vehicle for surveying and mapping, further comprising:

> obtaining photographing parameters of a photographing apparatus carried by the unmanned aerial vehicle for surveying and mapping, the photographing parameters comprising single-photo photographing areas of the unmanned aerial vehicle for surveying and mapping at a set flight altitude, and each photographing point being corresponding to one of the single-photo photographing areas; and
> determining the preset relative position relationship between each two photographing points in the combined photographing point set according to a preset photo overlap degree index and the single-photo photographing areas,
> the surveying and mapping parameters further comprising the set flight altitude, and the set flight altitude being set to instruct the unmanned aerial vehicle for surveying and mapping to perform a flight photographing in the area to be surveyed and mapped at the set flight altitude.

24. The method according to claim 23, wherein the determining the preset relative position relationship between each two photographing points in the combined photographing point set according to a preset photo overlap degree index and the single-photo photographing areas comprises:

> determining a size of a single photo according to a frame size and a pixel width of the photographing apparatus;
> constructing a two-dimensional coordinate system, and selecting a target point in the two-dimensional coordinate system as the central photographing point;
> generating a central photo in the two-dimensional coordinate system according to the central photographing point and the size of a single photo;
> generating four peripheral photos matching the preset photo overlap degree index with the central photo at an upper left corner, a lower left corner, an upper right corner, and a lower right corner of the central photo, respectively;
> determining a coordinate value of a peripheral photographing point corresponding to each of the four peripheral photos in the two-dimensional coordinate system according to a mapping relationship between the size of a single photo and the single-photo photographing areas; and
> determining the preset relative position relationship between each two photographing points in the combined photographing point set according to coordinate values of the central photographing point and each peripheral photographing point in the two-dimensional coordinate system.

25. The method according to claim 23, before the obtaining photographing parameters of a photographing apparatus carried by the unmanned aerial vehicle for surveying and mapping, further comprising: calculating the set flight altitude according to a pixel width of the photographing apparatus, lens focal length of the photographing apparatus, and a ground pixel resolution.

26. The method according to claim 23, wherein the obtaining photographing parameters of a photographing apparatus carried by the unmanned aerial vehicle for surveying and mapping comprises: calculating the single-photo photographing areas of the unmanned aerial vehicle for surveying and mapping at the set flight altitude according to a pixel width of the photographing apparatus, a frame size of the photographing apparatus, and a ground pixel resolution.

27. An operation control method for unmanned aerial vehicle for operation, applied to the operation control system according to any one of claims 1-3, comprising:

receiving an operation route sent by a control terminal; and
performing a flight operation in at least one operation plot according to the operation route.

28. An operation control device for a control terminal, applied to the operation control system according to any one of claims 1-3, comprising:

a map tile data obtaining module, configured to obtain map tile data corresponding to an operation area;
a map displaying module, configured to generate an area map of the operation area according to the map tile data and display the area map;
an operation plot determining module, configured to determine at least one operation plot in the operation area according to at least one area locating point selected by a user from the area map; and
an operation route generating and sending module, configured to generate an operation route corresponding to the at least one operation plot, and send the operation route to an unmanned aerial vehicle for operation to make the unmanned aerial vehicle for operation perform a flight operation according to the operation route.

29. An operation control device for an unmanned aerial vehicle for operation, applied to the operation control system according to any one of claims 1-3, comprising:

an operation route receiving module, configured to receive an operation route sent by a control terminal; and
a flight operation module, configured to perform a flight operation in at least one operation plot according to the operation route.

30. A control terminal, comprising a memory, a processor, and a computer program stored in the memory and capable of running on the processor, wherein when the processor executes the program, the method according to any one of claims 4-26 is implemented.

31. An unmanned aerial vehicle for operation, comprising a memory, a processor, and a computer program stored in the memory and capable of running on the processor, wherein when the processor executes the program, the method according to claim 27 is implemented.

32. A computer readable storage medium, wherein a computer program is stored on the computer readable storage medium, and when the program is executed by a processor, the operation control method for a control terminal according to any one of claims 4-26, or the operation control method for an unmanned aerial vehicle for operation according to claim 27 is implemented.

FIG. 1

| Obtaining map tile data corresponding to an operation area | Step 210 |

| Generating an area map of the operation area according to the map tile data and displaying the area map | Step 220 |

| Determining at least one operation plot in the operation area according to at least one area locating point selected by a user from the area map | Step 230 |

| Generating an operation route corresponding to the at least one operation plot, and sending the operation route to an unmanned aerial vehicle for operation to make the unmanned aerial vehicle for operation perform a flight operation according to the operation route | Step 240 |

FIG. 2

Obtaining a reference photographing location point corresponding to the area to be surveyed and mapped, and establishing a mapping relationship between a photographing point in a combined photographing point set and the reference photographing location point — Step 311

Determining a plurality of auxiliary photographing location points corresponding to the reference photographing location point according to the mapping relationship and a preset relative position relationship between each two photographing points in the combined photographing point set — Step 312

Using the reference photographing location point and the plurality of auxiliary photographing location points as sample points for surveying and mapping based on which an unmanned aerial vehicle for surveying and mapping performs surveying and mapping in the area to be surveyed and mapped — Step 313

Step 310

Sending the surveying and mapping parameters to the unmanned aerial vehicle for surveying and mapping — Step 320

FIG. 3a

FIG. 3b

Determining one or a plurality of combined photographing areas for surveying and mapping within the area to be surveyed and mapped according to area to be surveyed and mapped information and a combined photographing area corresponding to a combined photographing point set

Step 411

Determining a plurality of photographing location points in the combined photographing area for surveying and mapping according to a preset relative position relationship between each two photographing points in the combined photographing point set

Step 412

Using the plurality of photographing location points as sample points for surveying and mapping based on which an unmanned aerial vehicle for surveying and mapping performs surveying and mapping in the area to be surveyed and mapped

Step 413

Step 410

Sending the surveying and mapping parameters to the unmanned aerial vehicle for surveying and mapping

Step 420

FIG. 4a

410    510    410    510

40 ⌣●                ●⌣50

410    510    410    510

FIG. 4b

| Receiving an operation route sent by a control terminal | Step 510 |

| Performing a flight operation in at least one operation plot according to the operation route | Step 520 |

FIG. 5

| Map tile data obtaining module | — 610 |

| Map displaying module | — 620 |

| Operation plot determining module | — 630 |

| Operation route generating and sending module | — 640 |

FIG. 6

| Operation route receiving module | — 710 |

| Flight operation module | — 720 |

FIG. 7

FIG. 8

## INTERNATIONAL SEARCH REPORT

| International application No. |
| --- |
| **PCT/CN2018/116661** |

### A. CLASSIFICATION OF SUBJECT MATTER

G06F 17/00(2019.01)i

According to International Patent Classification (IPC) or to both national classification and IPC

### B. FIELDS SEARCHED

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, CNKI, WPI, EPODOC, 无人机, 无人, 飞行器, 瓦片, 测绘, 生成, 航线, 地图, 地图瓦片, 瓦片地图, 拍摄, 照片, 参考, 位置, 区域, tile, map+, image, craft, route, region, position, referenc

### C. DOCUMENTS CONSIDERED TO BE RELEVANT

| Category* | Citation of document, with indication, where appropriate, of the relevant passages | Relevant to claim No. |
| --- | --- | --- |
| X | CN 108846004 A (YUNIVERSE AVIATION TECHNOLOGY (SHANGHAI) CO., LTD.) 20 November 2018 (2018-11-20) description, paragraphs [0038]-[0061], and figures 1-8 | 1-32 |
| A | CN 104573733 A (SHANGHAI JIAO TONG UNIVERSITY) 29 April 2015 (2015-04-29) entire document | 1-32 |
| A | CN 108647252 A (YUNIVERSE AVIATION TECHNOLOGY (SHANGHAI) CO., LTD.) 12 October 2018 (2018-10-12) entire document | 1-32 |
| A | CN 108536829 A (INSTITUTE OF CHINESE MATERIA MEDICA, CHINA ACADEMY OF CHINESE MEDICAL SCIENCES) 14 September 2018 (2018-09-14) entire document | 1-32 |
| A | CN 108536863 A (YUNIVERSE AVIATION TECHNOLOGY (SHANGHAI) CO., LTD.) 14 September 2018 (2018-09-14) entire document | 1-32 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **31 July 2019** | **20 August 2019** |

| Name and mailing address of the ISA/CN | Authorized officer |
| --- | --- |
| **State Intellectual Property Office of the P. R. China** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2018/116661** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2012141026 A1 (ELECTRONICS & TELECOMMUNICATIONS RESEARCH INSTITUTE) 07 June 2012 (2012-06-07) entire document | 1-32 |

Form PCT/ISA/210 (second sheet) (January 2015)

**INTERNATIONAL SEARCH REPORT**
**Information on patent family members**

International application No.

**PCT/CN2018/116661**

| Patent document cited in search report | | | Publication date (day/month/year) | Patent family member(s) | | | Publication date (day/month/year) |
|---|---|---|---|---|---|---|---|
| CN | 108846004 | A | 20 November 2018 | None | | | |
| CN | 104573733 | A | 29 April 2015 | CN | 104573733 | B | 04 May 2018 |
| CN | 108647252 | A | 12 October 2018 | None | | | |
| CN | 108536829 | A | 14 September 2018 | CN | 108536829 | B | 26 April 2019 |
| CN | 108536863 | A | 14 September 2018 | None | | | |
| US | 2012141026 | A1 | 07 June 2012 | KR | 20120087233 | A | 07 August 2012 |
| | | | | US | 8670614 | B2 | 11 March 2014 |

Form PCT/ISA/210 (patent family annex) (January 2015)